Europäisches Patentamt

European Patent Office

Office européen des brevets

(19)

(11) Publication number: **0 098 913**

**A2**

(12) **EUROPEAN PATENT APPLICATION**

(21) Application number: **83101777.7**

(22) Date of filing: **23.02.83**

(51) Int. Cl.³: **G 01 P 13/00**

(30) Priority: 23.02.82 ES 509842
22.03.82 ES 510664
13.04.82 ES 511397
23.08.82 ES 515186
23.08.82 ES 515187
14.10.82 ES 516506
07.12.82 ES 518012
15.12.82 ES 518238
21.12.82 ES 518434
21.12.82 ES 518435
21.12.82 ES 518436
24.12.82 ES 518567
24.12.82 ES 518568
29.12.82 ES 518671

(43) Date of publication of application:
25.01.84 Bulletin 84/4

(84) Designated Contracting States:
AT BE CH DE FR GB IT LI NL SE

(71) Applicant: Flores Gomez, José
Plaza de Pio XII, num. 3
Ciudad Real(ES)

(72) Inventor: Flores Gomez, José
Plaza de Pio XII, num. 3
Ciudad Real(ES)

(74) Representative: Lorenz, Eduard et al,
Rechtsanwälte Lorenz, Eduard - Seidler, Bernhard
Seidler, Margrit - Gossel, Hans-K. Philipps, Ina, Dr.
Widenmayerstrasse 23
D-8000 München 22(DE)

(54) **Movement sensor.**

(57) Movement sensor includes a conductor body of the electricity which moves easily over a support the latter also having fixed elements of the electricity. When the mobile conductor body moves over the fixed conductor elements, successive electrical contacts are established. This permits to establish as many different switches as desired throughout the path of the mobile body. With the body placed in a determined position and in an inoperative situation, the mobile conductor body will be positioned at a point of the support which supposes a stable equilibrum. In this situation, the mobile conductor body will seek a new stable position and travel a certain space throughout a curved path, closing switches in its run. The fact that it closes switches at a determined point of the path does not indicate movement. The fact that it closes, at successive times, switches in different zones means that a displacement of the conductor body has been produced, that is, movement of the sensor. The distance between the zones wherein closing of the switches has been produced indicates amplitude of the movement. If the support presents different curvature radii in different zones, a different sensitivity will correspond to each zone. With the mobile conductor body in a zone of great curvature radius, a slight movement will produce a great displacement of the mobile body on the support and, consequently, the closing, at different times, of various switches. An alarm system comprising the movement sensor is also described.

EP 0 098 913 A2

Movement Sensor

Description of the invention

Actually, vibration sensors that are highly varied and
with very complete electronic analyzers are in use; but
in the field of positional change sensors, mercury
sensors are still being used, which require levelling
when they are installed, and in which the procedure
for controlling sensitivity is very rudimentary. The
most highly-developed sensors, in this respect, are
the ones protected by U.S. patents 3 742 478 of Robert
W. Johnson and U.S.  4 196 429 of Curtis H. Davis. These
sensors do not require placing in a determined starting
position , but they have a fixed sensitivity level,
which limits their versatility. In this patent are
described various examples, within a general context, of sensors that can be placed practically in any
starting position and starting therefrom pick up
movements of any desired amplitude. This offers
wide utility. There are times when picking up the
slightest movement is of interest (as in the case
of an exhibited work of art). At other times, slight
vibrations are not significant, and we are interested
in an average sensitivity (for example, in protecting
a car without the fact that leaning against it causes
activation of the alarm). We may be interested in a low
sensitivity (for example, that the sensor does not pick
up movements of the handcarrying of a satchel, but which
picks up ample and brusque movements of a sudden jerk).

The devices which permit obtaining these functions are
based on a conductor sphere of the electricity, which
rolls in contact with other conductor elements, opening
and closing connections therebetween. Various examples
are described below, each one with its peculiarities
but all of them within this line.

1. Movement sensor in which sensitivity depends on
   the home position

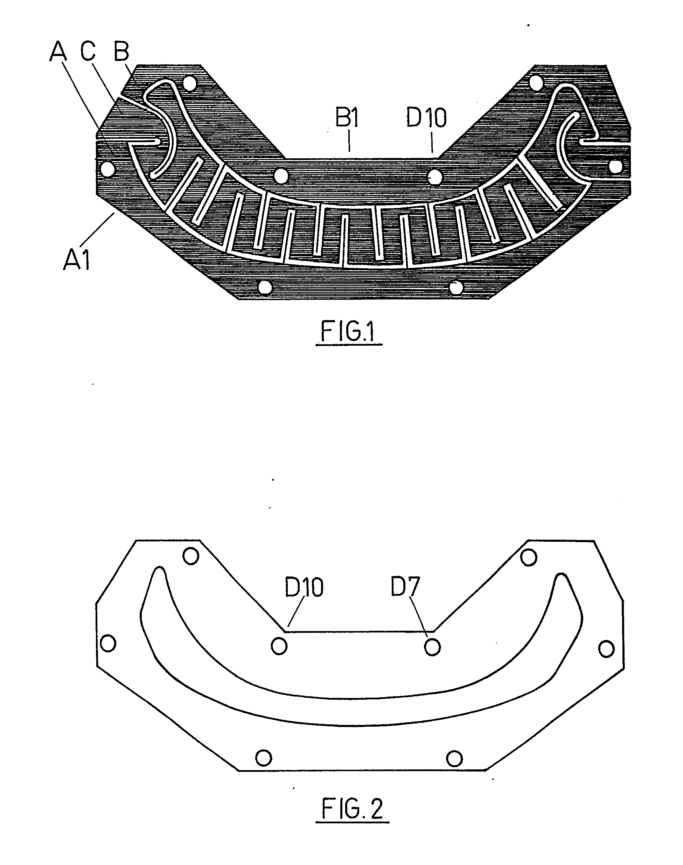

    It originates in a flat, printed circuit plate.
    A zone of said printed circuit has been treated
    in order to obtain some metallic tracks similar
    to those shown in figure 1.

Shown therein are three separate metallic tracks:
A, B and C (fig.1).

On the other hand, a plate of non-conductor material
internally trimmed is provided, according to
figure 2.

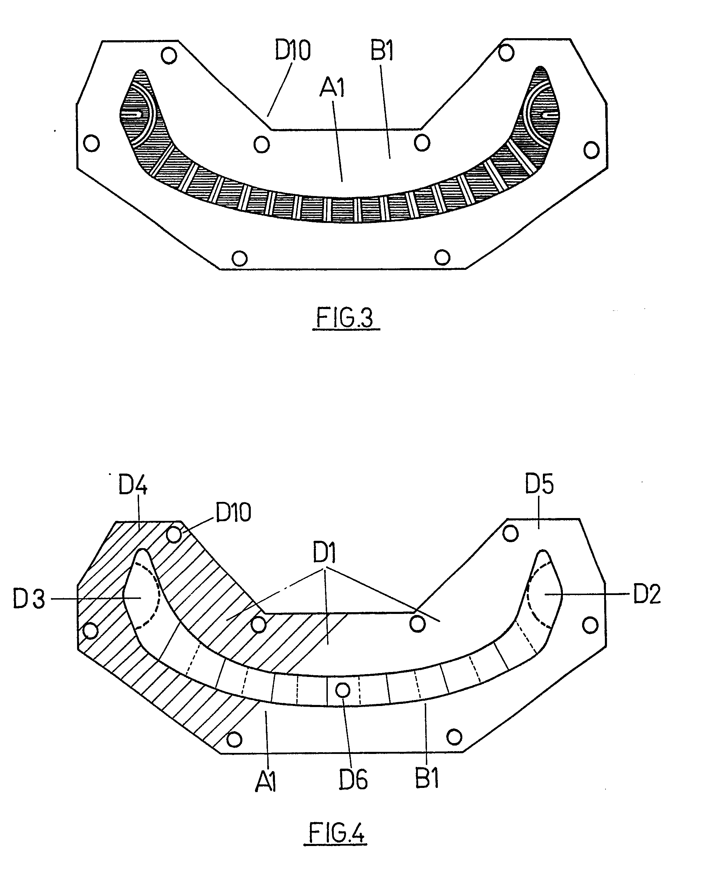

This plate is placed on the metallic tracks of figure 1
in order to obtain the container shown in figure 3.

For a better understanding of the subsequent drawings,
I will represent by means of a solid line the zone of
the printed circuit in which track C rolls onto track A
(zone A1 in figures 1 and 3) and, with dotted lines,
the zone in which track C rolls onto track B (zone B1
in figures 1 and 3); with the container of figure 3
represented as shown in figure 4.

In this container, we place a conductor sphere of the
electricity designated by the letter D6 in figure 4.

In order to close this container, another printed circuit
plate, similar to the one in figure 1, is prepared. This
plate is based as a top. Facing the type A track of the
base, there is, at the top, another track A which is
a specular image of the one at the base. Exactly the
same applies to tracks B and C. We will also have new
type A1 and B1 zones at the top facing the similar
zones at the base.

These new A, B and C tracks have to be joined electrically by means of adequate connections (for example,
welded cables) to the corresponding A, B and C tracks
at the base of the container. In this manner, the
type A tracks will form a single body, and the same
will apply to the B and C tracks.

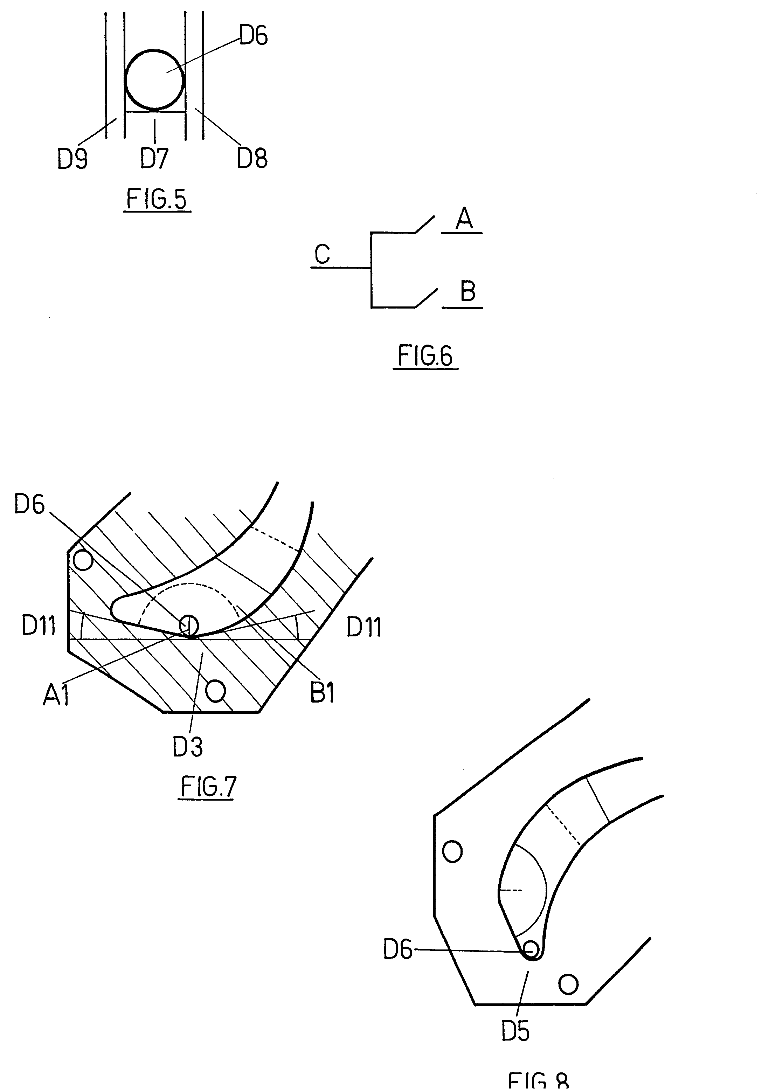

Lastly, figure 5 shows, in section, the state of the
D6 sphere within the container. D8 is the printed
circuit of the base, D9 is that of the top, and D7
is the non-conductor plate of figure 2.

The holes D10 shown in figures 1, 2, 3 and 4 are used
so that, once the cover of the container is mounted,
screws, rivets or similar elements are passed therethrough, which close said container firmly.

Figure 1 shows that there is no electrical contact
between the metallic tracks A, B and C.

Now then, once the closed container described hereinabove has been constructed, and having the metallic
sphere in its interior, it is different. When the
metallic sphere rests simultaneously on tracks A and C,
it establishes electrical contact between them. This
occurs in the type A1 zones (figures 1, 3 and 4) represented by the solid line in figure 4. If the metallic
sphere rests simultaneously on tracks B and C, electrical
contact is established between them. This occurs in
the type B1 zones (figures 1, 3 and 4) represented by the dotted line in figure 4.

In short, we have a situation the equivalent electric circuit of which is shown in figure 6. Shown therein are two switches: A with C which has been marked with the letter A and which closes with the passage of the conductor sphere through the Al zones, and B with C which has been marked with the letter B and which closes with the passage of the conductor sphere through the Bl zones.

Having established these bases, we are then in a position to understand how this device, with the adequate electronic circuits, can perform the three types of functions described in the introduction.

1st type:

This first type of function is obtained principally by placing the device so that the conductor sphere is in the Dl zone (Fig. 4).

Having placed the apparatus inside or on the object to be protected, and with both of them stationary, the conductor sphere is placed in the lowest possible position. Said sphere may be on any of the Al or Bl zones (figures 1, 3 and 4), closing the switch A or B but never both of them simultaneously.

At any movement, the metallic sphere will move and
pass over the types A1 and B1 zones, closing, at
different times, the switches A and B.

In this manner, a movement of the sensor, means the
closing, at least once, of each one of the switches
A and B.

If the A1 and B1 zones are adequately separated,
slight movements or vibrations will not be felt, since
they are not capable of moving the conductor sphere
along the distance existent between both zones.

2nd type:

It corresponds to starting positions which permit
transport without, under normal conditions, the conductor sphere closing the two switches. In case of
abnormal movement, corresponding to attempted theft,
the conductor sphere closes the two switches, at
different times, and this will be the indication of
an emergency situation.

The apparatus is placed so that the conductor sphere
is positioned as shown in figure 7. The conductor
sphere (D6) is resting in an A1 zone, closing switch A.
In this position, transport movement, as in the case
of a satchel, is possible, since in the normal movement
the metallic sphere will not reach the nearby type B1
zone. If someone tries to snatch the satchel, the set will rotate and the metallic sphere will close
the other switch (reaching the Bl zone), this being
an indication of attempted theft.

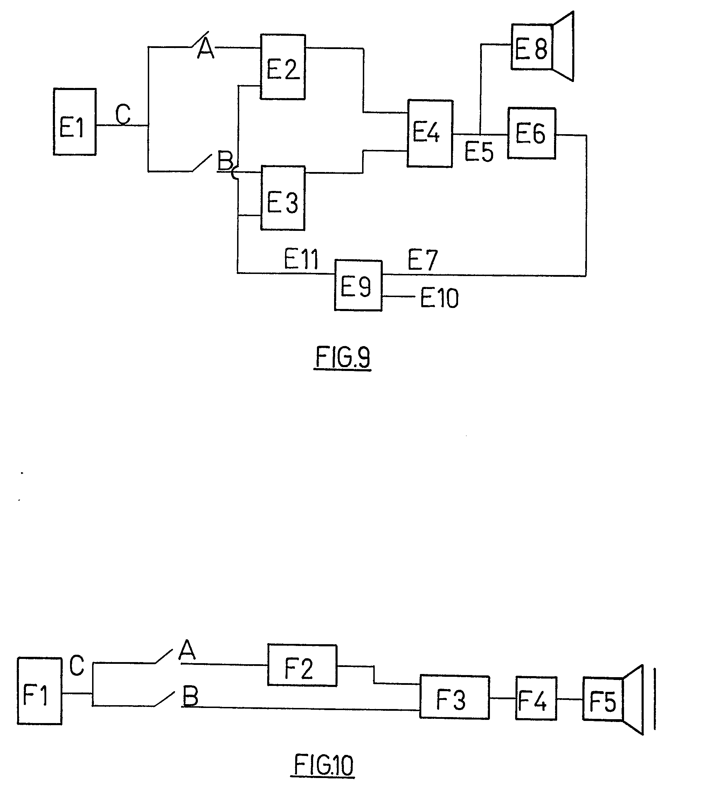

Placing the apparatus so that the conductor sphere
is positioned as shown in figure 8, even the normal
transport movement by car or train will not be
capable of causing the metallic sphere to reach the
Al and Bl zones. In order to obtain this effect, the
D5 zone may be made as deeply as desired, with the
conductor sphere therefore remaining far from the
nearby Al and Bl zones. Now then, a ninety-degree
turn of the base plane will be sufficient to make
this plane horizontal and allow the conductor sphere
to move on it easily, closing at different times
the A and B switches and thereby indicating movement.

This position may be used to protect a suitcase
during the trip. The suitcase will be horizontal
in the luggage rack. If someone places it vertically,
this will suppose a ninety-degree turn which is
detected by this system.

3rd type:

If we subject this device to a violent movement, the
A and B switches will close alternately in a very
rapid sequence.

- 8 -

By observing the time between the closing of A and B, we can tell up to what point the movement is rapid.

In order to obtain a uniform result in this process, the distances between the A1 and B1 zones have to be the same in all the zones of the container.

In this manner, we can detect exclusively violent movements in which the time interval between shutoffs in A and in B are less than a determined value.

This possibility helps in detecting robbery attempts by the snatching system.

## 1.1 Electronic circuit for detecting any movement with this sensor

Figure 9 shows a functional diagram of an elctronic circuit which, coupled with the sensor described hereinbefore, indicates to us by means of an electric signal the manipulations carried out to the sensor, which suppose moving it.

E2 and E3 are bistable. Their left lower inlets, connected to point E11, are used to disconnect both bistables prior to the start of monitoring, or after movement has been picked up.

The upper inlets (to the left), which are connected
to A and B, are the ones that activate the bistables.

In monitoring situation, E1 supplies the C track
the necessary potential to activate the bistables.

In stationary situation, E1 does not supply C the
potential needed by the bistables for their activation.

In a monitoring situation and if a movement is produced,
the A and B switches will close, although at different
times. This supposes activation in both distables
(E2 and E3).

The outlets of the bistables (to their right) are
connected to a device E4 which, upon picking up
activation in the two bistables transmits a determined signal to its outlet (point E5), indicating
that there has been manipulation with movement of
the sensor.

If only one switch closes, and therefore one single
bistable is activated, E4 does not emit any signal.
As a consequence, slight movements or vibrations will
not produce false alarms.

The element E8 is a warning mechanism (for example,
a siren) which, upon receiving from E4 indication
of movement, starts operating.

E6 picks up at the outlet of E4 the indication
that movement has been produced and, after a certain time, transmits through E9 the necessary
signal for deactivation of the bistables E2
and E3, leaving them ready to detect another
movement.

At point E5 remains indication of movement during
the time it takes E6 to transmit deactivation
signal to E2 and E3.

During this time, the warning mechanism E8 is operating.

E9 transmits to the bistables E2 and E3 the necessary
signals for their deactivation, and having them
available for new detections.

These signals may proceed from E6 (after an indication
of movement) or from E10. An outside signal reaches
E10 (from the control circuits) when monitoring
starts.

1.2. <u>Electronic circuit used in detecting violent
movements</u>

Figure 10 is a functional diagram of the electronic
circuit which, in conjunction with the sensor described herein, indicates to us by means of an electric
signal the manipulations carried out to the sensor
which suppose a violent movement.

The layout of the connections to the sensor
(A, B and C) is similar to the one described in
the preceding case.

F2 is a monostable which, upon receiving the
voltage which F1 has in a monitoring situation
through switch A, reproduces it at its outlet
and maintains it here during a certain time,
although it has already disappeared from the
inlet.

If, within this time, a lock-out is produced in B,
we will have the two inlets of F3 at the voltage
of F1 in monitoring state.

In this case, F3 notifies this situation at its
outlet.

As we shall see, a signal is produced in F3 only
when, after A has closed, and within a short time,
B also closes. This situation is the one that is
produced in the sensor in the face of a violent
movement. By controlling the timing of the monostable F2, the speed of the movements to be detected
is selected.

The element F4 is a monostable which, upon receiving
indication of violent movement from the element F3,
operates, during a certain time, the warning mechanism

F5 (which may be a siren).


2. <u>Movement sensor which allows any starting position
and distinguishes the amplitude of movement by the
number of switches activated</u>

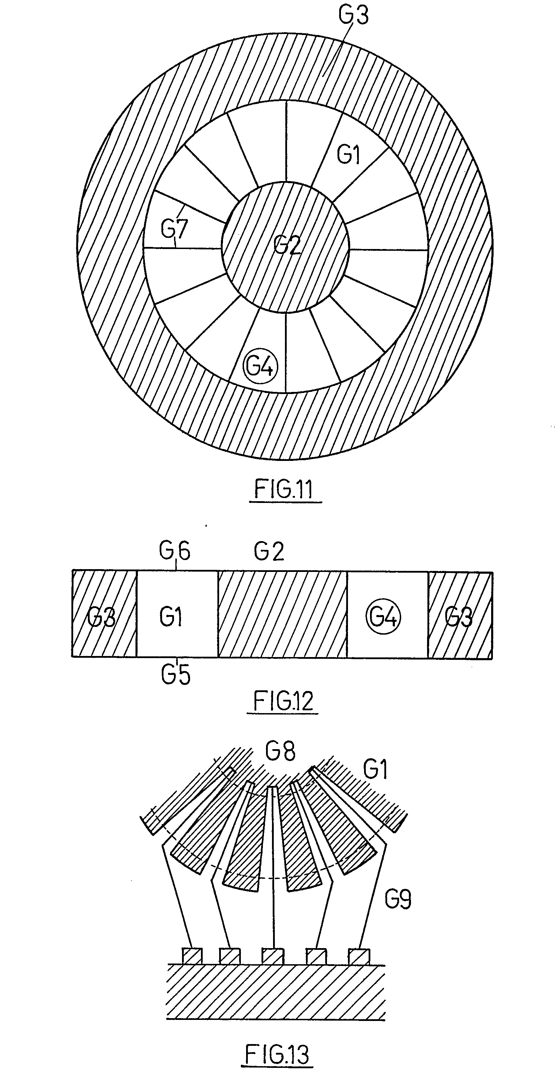

It deals with a container (figure 11) which compels
a conductor body of the electricity to move within
a circular path G1. The conductor body which moves
inside the container is G4. The elements G2 and G3
are the ones that configure the contour of the
circular channel G1, in which moves the body G4,
which may be a metallic sphere. Figure 12 shows a
section of this container:

Shown therein is the mobile body G 4 in a channel.
The base and top of the container (elements G5
and G6 in figure 12) have conductor tracks of the
electricity between which there is normally no
electrical contact. When the mobile conductor body
rests simultaneously on two contiguous conductor
tracks, it makes a circuit between them. For this
reason, a pair of conductor tracks constitute,
together with the mobile conductor body, a switch.
The lines G7 in figure 11 represent zones wherein
the switch mechanism takes place when the conductor
body passes over them. This distribution of switches is the same in base and top. Figure 13 shows a form
of making these switches:

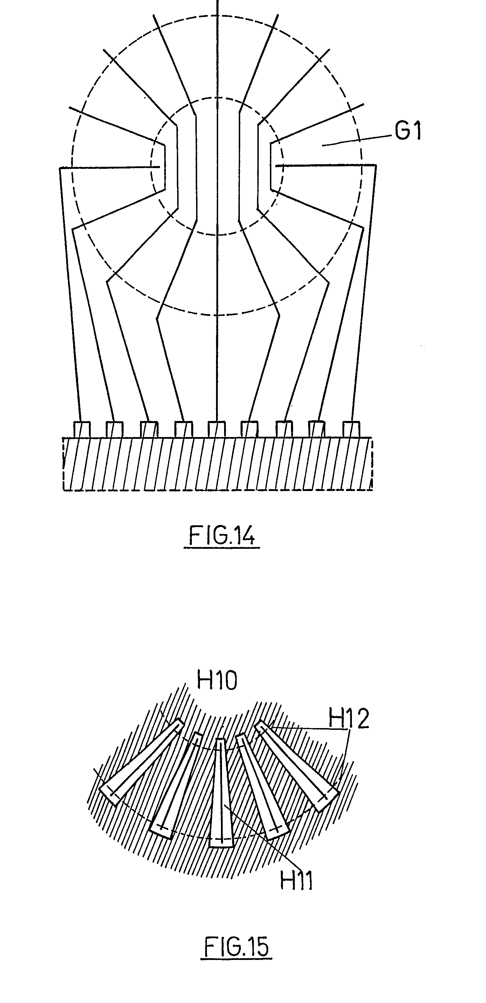

On a track base common to all the switches G8 is
introduced a set of fine tracks G9 proceeding from
the corresponding electronic circuits. The fine tracks
G9 reach the zone travelled by the mobile body and,
together with the base track G8, these constitute
switches situated throughout said path. If it is
desired, a fine track may be made to pass through
the path of the mobile body at two different points
or more, as shown in figure 14. In this manner, the
number of tracks to be analyzed electrically is thus
reduced, obtaining the same result in regard to operation.

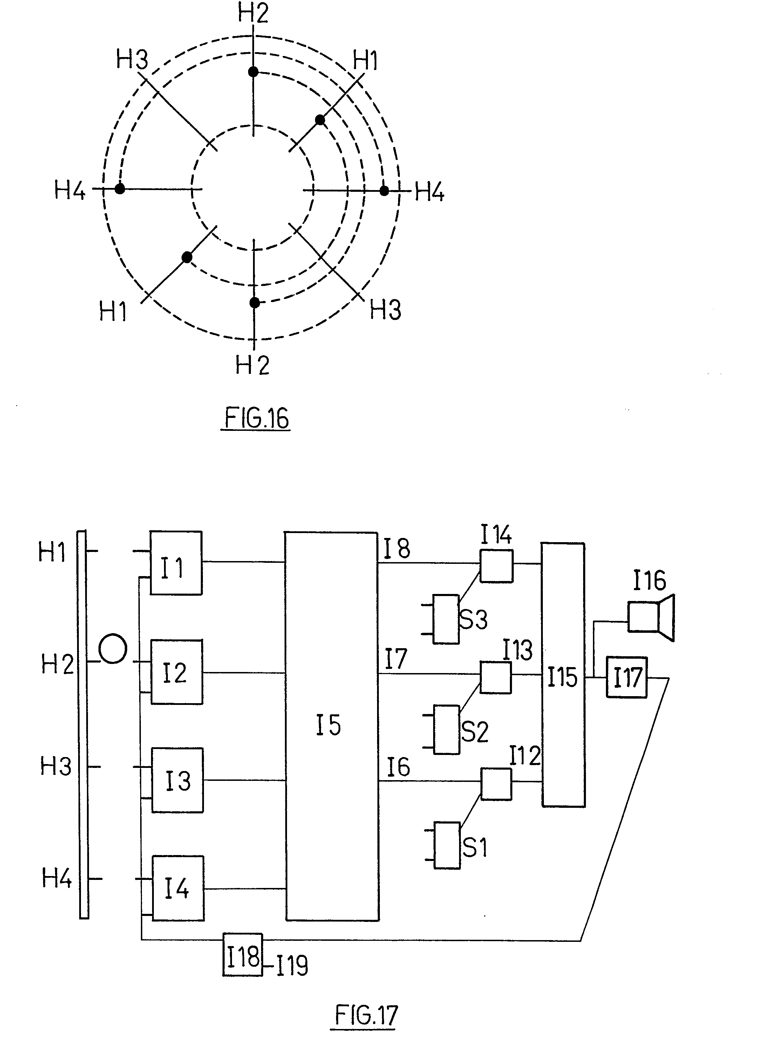

Figure 15 illustrates another form of obtaining two
better perfected switches. It requires using, in
this case, a double face printed circuit. On a
conductor track base common to all the switches H10
are some fine rectangular spaces with conductor
material bars of the electricity H11, placed regularly
throughout the path of the mobile body H12. In order
to reduce the number of tracks to be controlled by
the electronic circuits, a sequence of bars is
established and repeated throughout the path. In our
example, we have a sequence of four bars: H1, H2,
H3, H4, H1, H2, H3, H4 etc. All the bars H1 are
interconnected by the rear part of the printed
circuit as shown in figure 16 (the tracks of the rear
face are represented by dotted lines). The same will apply to tracks H2, H3 and H4. A sequence of four switches is then established, which is repeated successively throughout the path of the mobile body. In short, and in the two described examples, there are switches formed by a fine track surrounded by another dense track which covers the whole surface of the sensor. When the mobile conductor body passes over the fine track, it puts the latter in contact with the dense track (base track), closing the switch corresponding to this tiny fine track.

## 2.1. Electronic circuit suitable for this sensor

Figure 17 illustrates the diagram of the electronic circuit used in analyzing the behavior of the sensor. To each one of the switches (H1, H2, H3, H4) is coupled a bistable (I1, I2, I3, I4). In a monitoring situation, the switches, upon closing, communicate to the bistable the voltage it needs for activation. Each switch will activate its corresponding bistable. If only a vibration or a slight and insignificant movement is produced, only one switch will close or none at all, which does not suppose an indication of movement. If the movement is significant, two switches will close and the bistables are activated. A more ample movement will close three switches, at different times, and three bistables will be activated. More ample movements will activate four bistables, etc.etc.

For an analyzer, a decoder connected to the
bistables will suffice. At the inlet of the decoder I5 (fig. 17), we will have a binary number.
If the binary number has only one one (an activated
bistable), no indication of movement will be produced. If the binary number at the inlet of I5
has two ones (two activated bistables), the corresponding indication will be produced in I6. If the
binary number has three ones, the corresponding
indication will be produced in the outlet I7. If
the binary number has four ones, indication will
be produced in I8. At any of the outlets I6, I7, I8,
the desired warning or alarm mechanism may be
connected. Depending on the amplitude of the movements to be picked up, one or another outlet is
connected. Evidently, more independant switches
may be used, with more bistables and a decoder
with a greater number of inlets. In this manner,
a greater number of sensitivity levels will be
obtained.

In order to be able to select the sensitivity levels
provided by this set, elements I12, I13 and I14
are used. These elements control the passage of the
movement indications proceeding from I6, I7 and
I8, respectively. These passage controls act according to the states of the bistables S1, S2 and S3,
respectively. The movement indicator signal proceeding
from I6 will pass by the element I12 if the S1
bistable is activated. If this bistable S1 is not

- 16 -

activated, the signal proceeding from I6 will not
pass by the element I12, and will not reach the
element I15. In order to obtain different sensitivities, any of the bistables S1, S2 and S3 are
activated, as desired. The signals that pass the
controls associated with the bistables reach the
element I15. When an indication of movement reaches
the latter, it operates the warning mechanism I16
(a siren for example). When a certain time has elapsed,
the element I17 transmits a signal to the bistables
I1 to I4 so that these will deactivate and be
available to pick up another movement. These bistables
may also be deacitvated by means of an outside signal
transmitted through I19.

This will be carried out at the start of monitoring,
upon deactivation of the alarm, etc.

3.    <u>Sensor which picks up movements starting from any
      home position and allows selection of sensitivity
      levels by means of fitting out of more or less
      switches throughout the path</u>

      In this sensor, in order to obtain different
      sensitivity levels, only two switches which are desired,
      from all possible ones, are fitted out.

If a high sensitivity is desired, all of them are
fitted out so that in a short travel, two contiguous
switches close and an indication of movement is
produced. If a low sensitivity is desired, only
switches regularly distributed but inter-housed
are fitted out, in this manner an ample movement
of the mobile conductor body is required in order to
produce the shutoff of two switches and activate
the foreseen warning mechanism.

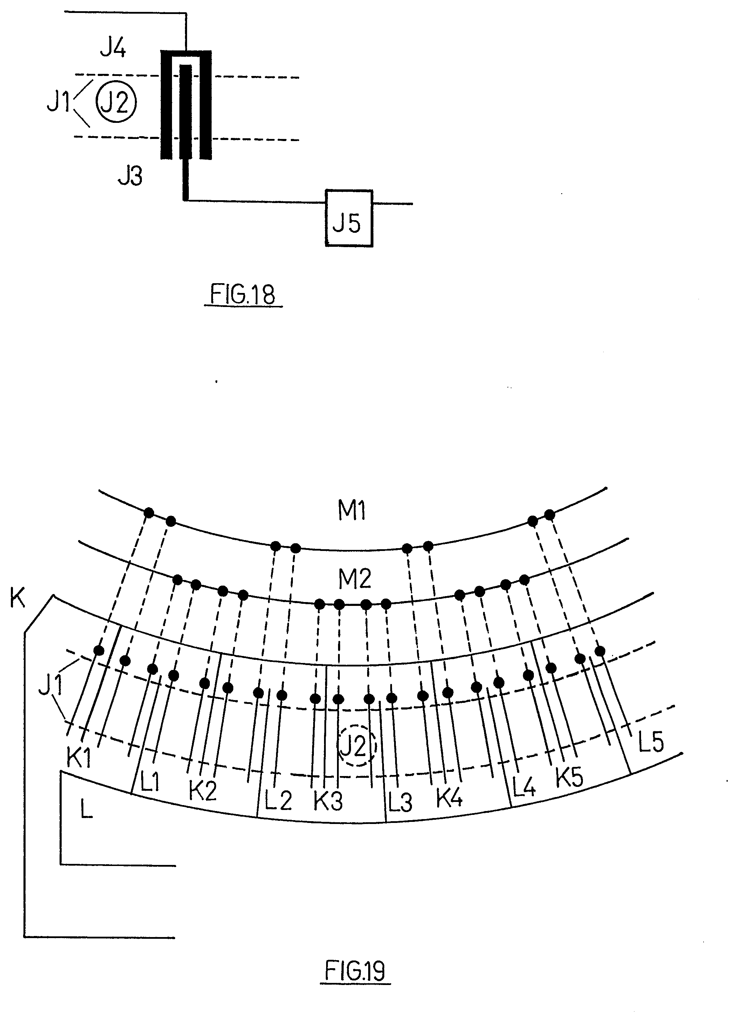

Figure 18 illustrates the procedure for fitting out
of a switch:

The element J3 is a conductor track, the element J4
is another track which surrounds track J3. Between
tracks J3 and J4 there is normally no electrical contact. The element J2 is the mobile conductor body
which, in this case, is a metallic sphere. The dotted
lines J1 indicate the movement path of the mobile
body J2. The element J5 is a bistable associated with
this switch. Let us suppose that the track J4 has the
voltage needed by the bistable J5 for its activation.
When the conductor body J2 passes over the tracks J3
and J4, it puts them in contact and the voltage
necessary for its activation  reached the bistable
J5. With it, the passage of the mobile conductor body
over the switch formed by tracks J3 and J4 is thus
memorized. If there is no voltage in track J4 needed
by the bistable J5 for its activation, even though
the mobile conductor body passes over these tracks
J3 and J4 thus putting them in contact, the bistable will not be activated. In short, the switch is fitted
out or available to pick up the passage of the don-
ductor body over it, if the voltage which activates
the bistable is supplied to track J4; otherwise, the
switch is not fitted out, and passage of the conductor
body over it will not activate the bistable.

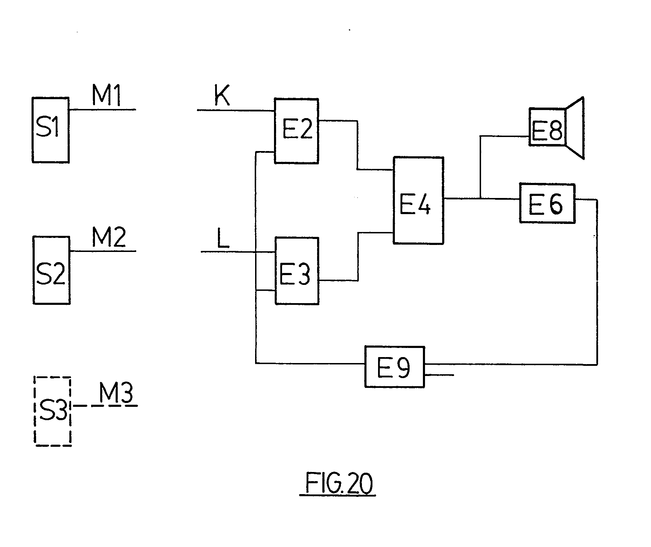

Figure 19 shows an example of this procedure in obtaining different sensitivity levels. The drawing of
this figure 19 corresponds to conductor tracks in
double face printed circuit with metallized drill:
the solid lines are tracks in the upper face; the
dotted lines J1 correspond to the path of the mobile
body J2; the rest of the thicker dotted lines are
trakcs of the rear face of the printed circuit; the
black points are face passes which connect tracks
of the front face with tracks of the back face.

Figure 20 shows the electronic circuits in conjunction
with this sensor. Connected to the bistables E2 and E3
(figure 20), respectively, are found tracks K and L. which
incide alternately in the path of the mobile body
J2 (figure 19). The terminals of these tracks K and L,
which are found in the path of the mobile body, have,
close to each one of them, and on either side, pairs
of tracks with which is constituted a switch with
possibility of fitting out, as mentioned hereinbefore.
In short, there are ten available switches of the
described type, which are designated in the following
manner in figure 19: K1, L1, K2, L2, K3, L3, K4, L4,
K5, L5. Switches formed with the track K in the center (these will be designated as type K switches) are
alternated with switches which track L has in the
center (these will be designated as type L switches).
If the voltage needed by the bistables for their
activation are supplied to the tracks M1, the switches
K1, L2, K4, L5 become fitted out; as we can see,
the type K and L switches, placed aternately and
sufficiently spaced out one from the other, become
fitted out. In order to activate the two bistables,
the mobile conductor body will have to travel the
existent space between two contiguous switches of
the four aforecited ones. The situation that the two
bistables E2 and E3 are activated is picked up by E4
(figure 20). This situation implies ample movement
starting form the starting position. The operation
of the set E2 E3 E4 E6 E8 and E9 is the one that has
been described with the same notation in item 1.1,
corresponding to figure 9, and for the first sensor.

If the activation voltage is supplied to M1 and M2, all
of the switches will become fitted out. The sequence
will be K1, L1, K2, L2, K3, L3, K4, L4, K5, L5. Between
two of the switches previously fitted out are provided
two additional and fitted out switches, one of each type.
The new type K one is placed alongside the old type L,
and the new type L one alongside the old type K.
The spaces are distributed so that the distance between
contiguous switches is the same in all the cases. The
space to be travelled now between contiguous and
fitted out switches, and of different type, is one-
third of the previous one; with it, the sensitivity has increased, since the travel necessary to activate
the two bistables is one-third of what was previously
anticipated.

The process in obtaining a new sensitivity level may
be repeated by introducing new pairs of switches between every two existent ones and fitting them out
in the same manner hereinbefore described.

The activation voltage is supplied to the elements
M1 and M2 by means of the sensitivity bistables S1
and S2 (figure 20). If only S1 is activated, only M1
will receive activation voltage, thus obtaining the
first sensitivity level. If the bistables S1 and S2
are activated, M1 and M2 will have activation voltage,
thereby obtaining a higher sensitivity. New sensitivity levels may be provided and using a new bistable
for each one of them. Another sensitivity level
would be putting two new switches between every
two previous ones and fitting them out with a
bistable S3.

4.   <u>Sensor which picks up movements starting from</u>
<u>any home position and allows sensitivity selection</u>
<u>by means of connection of more or less tracks</u>

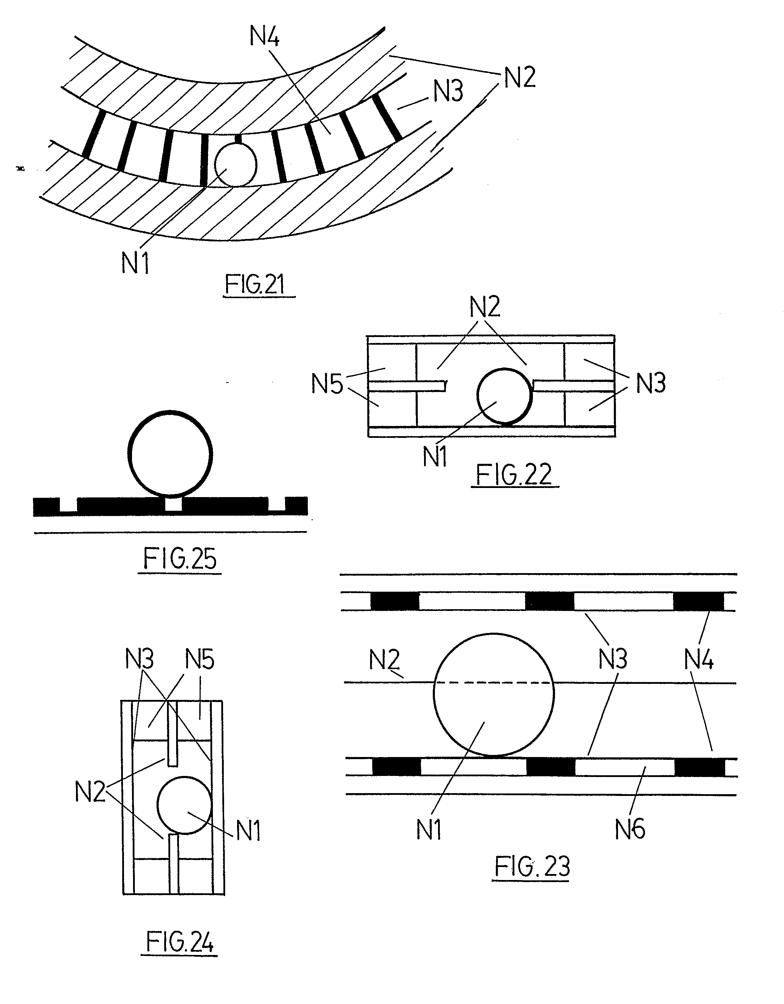

Figures 21,22, 23 and 24 illustrate different
aspects of the sensor set.

It deals with a conductor material sphere of the
electricity (N1), inside a curved container.

The container shown in figure 21 is coverless and
only represents one zone of the sensor. This container is completed until a circumference or any
closed figure.

The detector mechanism which is going to be
described and claimed takes place in a portion
of the curved path, and for this reason it is
not necessary to draw a complete container.

Figure 21 shows the base of the container (N3) and
the sides   (N2).

Figures 22 and 24 illustrate it in section: N2
are the sides and N3 the base and the top.

Figure 24 illustrates a longitudinal section wherein
the aforesaid elements are designated by the same
symbols.

The sides N2 are conductor material sheets of the
electricity which further compel the sphere N1
to follow a curved path. We will refer to these
elements N2 hereinafter as guides.

N3 (base and top) are insulating surfaces with conductor tracks of the electricity. These conductor tracks are designated by N4 in figures 21 and 23. Hereinafter, we will call them surfaces with tracks in referring to elements N3 and simply tracks in referring to the elements N4.

Between the surfaces with tracks N3 and the guides N2 are some non-conductor material sheets of the electricity (N5 in figures 22 and 24). Their function is to insulate, electrically speaking, the base and top (N3) of the guides (N2).

When the container is still, the conductor sphere (N1) is in the lowest position within the curved path. It will be in electrical contact with the guide N2 and resting also on a surface with metallic tracks (N3), touching perhaps one of the tracks N4.

If a movement is produced, the sphere will move throughout the curved path. At all times, the sphere will rest on one of the guides.

During movement of the sphere, this will rest successively on the different tracks it comes across in its path.

As a consequence, electrical communication is established between the guide and the tracks touched by the sphere.

The fact that there is electrical communication between the guide and one of the tracks does not indicate anything in regard to movement of the sensor.

The fact that successive electrical communications are produced between the guide and, at least, two tracks, is a clear indication of the movement of the sensor.

The distance between the affected tracks also permits telling the amplitude of said movement.

This sensor has important advantages over the preceding ones: In the sensors hereinabove described, electrical contact is produced between contiguous tracks when the conductor sphere fits into them (figure 25). This reduces freedom of movement of the sphere.

In the new sensor, the contact is between the conductor guide N2 and the tracks. The space between the tracks may be filled with non-conductor material (N6 in figure 23), and the sphere moves over a completely smooth curface.

On the other hand, in the previous sensors, the closing of the switches is an instant (the passage through the crack between two tracks). In this new sensor, the switch remains closed while the sphere rests on the track, giving the latter the voltage which it takes from the guide. The signal is, therefore, much better in this case.

In order to obtain a low sensitivity, a few
and widely-separated tracks will be used. To
produce indication of movement, the sphere has
to travel the space between two adjoining tracks.

In order to obtain a high sensitivity, tracks which
are very close one with the other will have to be
used. A slight movement will be sufficient to go
from one track to the adjoining one.

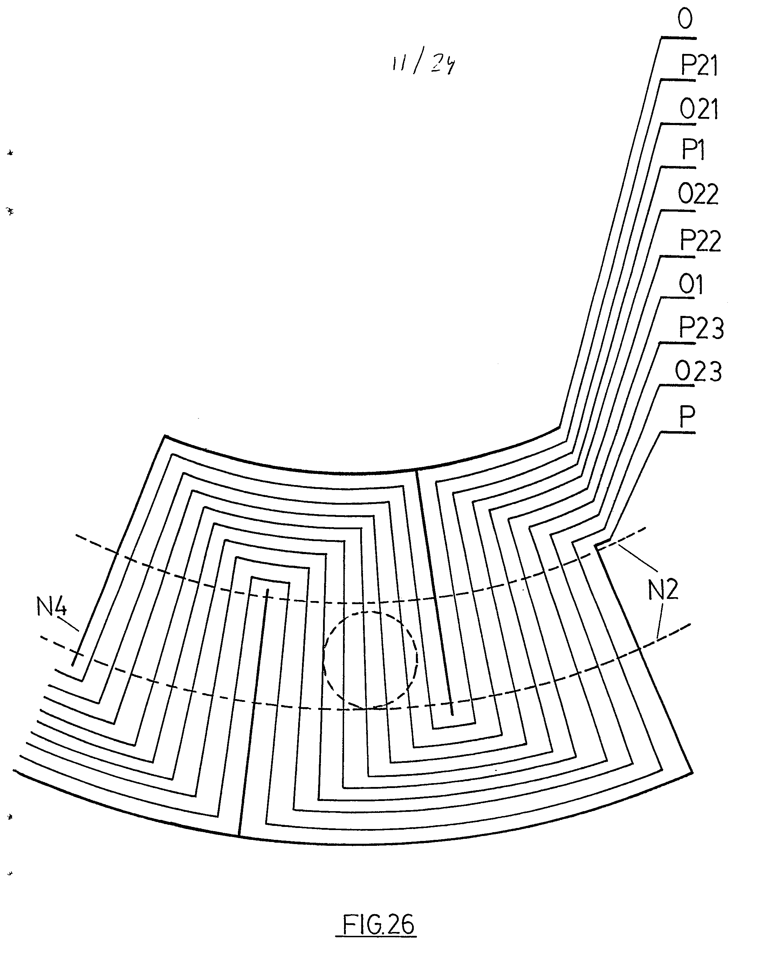

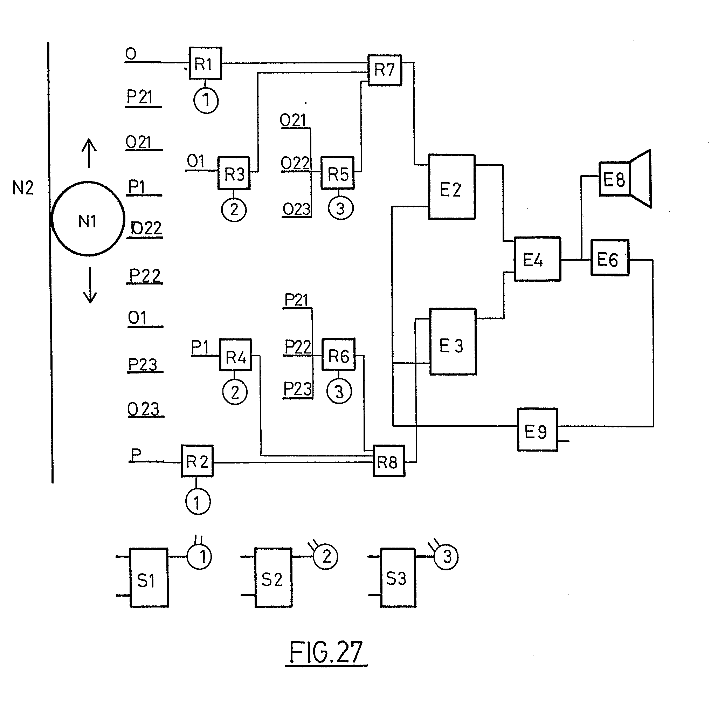

The manner in obtaining these different sensitivities
is shown in figures 26 and 27.

Figure 26 illustrates a variety of tracks (10, to be
precise), forming a sequence which is repeated as
often as desired.

By means of lines of points are shown the edges of
the guides which define the path to be followed by
the conductor sphere .

Figure 27 shows the manner of using these tracks.

The conductor guide N2 furnishes the conductor sphere
N1 the signal necessary to activate the bistables
E2 and E3 of the analyzer. This sphere N1 transmits
this voltage to the successive tracks on which it
progressively rests.

The operation of the analyzer formed with elements
designated by the letter E, in this figure 27, is
similar to that described in item 1.1 in regard to
figure 9.

The elements R7 and R8 transmit to their outlet
the signals that arrive at any of their inlets.

The elements R1, R2, give way to signals if the
bistable S1 (sensitivity selector) is activated.
In this case, the signals will reach the bistables
of the analyzer (E2 and E3), capable of activating
them and proceeding from tracks O and P exclusively.

In this case, the sequence of useful tracks which
the conductor sphere comes across in its path is:
O-P-O-P-O-P. A very ample movement is needed to
enable the sphere to travel the space between two
contiguous tracks and produce indication of movement.

By activating the bistables S1 and S2 (of sensitivity),
the elements R1 and R2, R3 and R4 allow passage of
the signals to the bistables E2 and E3. The sequence
of useful tracks will be O-P1-O1-P-O1-P1-O-P1 etc.
The space to be travelled by the sphere to enable it
to pass over two contiguous tracks, activate the
bistables E1 and E2 and produce indication of movement,
is now one-third of the space previously necessary.
The sensitivity has increased.

If the bistables S1, S2 and S3 (of sensitivity) are
activated, the elements R1 to R6 allow signals to pass
and the sequence of useful tracks is $\underline{O}$ -P21-O21-P1-
O22-P22-O1-P23-O23-$\underline{P}$. The space to be travelled now
by the conductor sphere to go from one type O track
to another type P track is one-ninth of what was initially needed. The sensitivity is, therefore, much
greater.

The process may continue. It always deals with
introducing, in each sensitivity level, two new
tracks between every two previous ones, establishing
a new alternation of denser tracks.


5. Sensor with tridimensional curvature

In the previous sensors, the travel of the metallic
sphere is a curved line. In this case, a rotation
around the tangent of the path at the point where
the sphere is does not produce movement of said
sphere. This poses a slight problem in practice,
in as much as the intruder that moves the sensor
never knows which is the axis tangent to the path.
At any rate, there is a solution to this slight
difficulty. For this reason, a tridimensionally
curved surface is used as support of the conductor
sphere (cylindrical, spherical, parabolic, etc.
surface). On it are conductor tracks of the electricity normally electrically insulated one with the
other. On this surface with tracks is easily moved
a mobile conductor body. When the mobile conductor
body rests on two nearby tracks simultaneously, it
makes the circuit between them. This mechanism
constitutes a switch. The zone where the shut-off
mechanism of a switch is produced is the line in
which two conductor tracks are nearby; we will call
these zones switch lines. The desired switch lines
may be established on the support surface. In order
to avoid having to monitor a large number of switches, similar groups of switch lines are prepared in different zones of the support surface; we will call these groups monitoring zones.

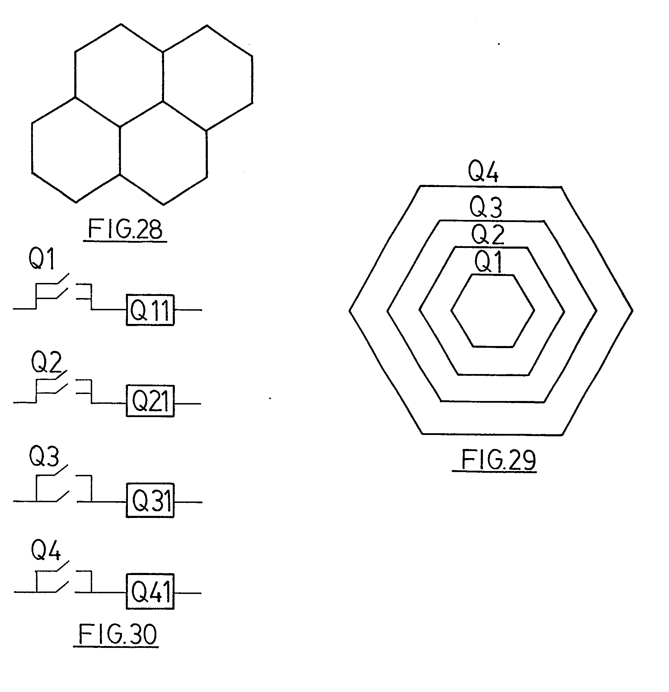

Figure 28 shows the raster of hexagonal modules which will cover the curved surface of the sensor. Figure 29 illustrates the distribution of switches which correspond to each hexagonal module. Each one of the hexagonal elements has a sequence of concentric switches (Q1, Q2, Q3,Q4), thereby obtaining from this sequence of switches different sensitivity levels, by applying the concepts described in the previous sections. In the movements of the mobile conductor body on the raster in any direction, it will always come across a sequence of different switches which will pick up the movement. All of the switches that are in a similar position in all the hexagons are shunt-connected so that one single electronic element monitors all of them. The closing of a switch, of the many existent ones of a concrete type (in the same position inside the hexagon), is picked up by the corresponding electronic element. In the example drawn in figure 29 are shown the switches Q1, Q2, Q3, Q4. Each hexagon will have another four switches Q1. Q2, Q3, Q4. All of the switches Q1 are connected to the electronic element Q11 (figure 30), and the Q2, Q3 and Q4 to the electronic elements Q21, Q31, Q41, respectively. If two control electronic elements pick up the closing, at successive times, of switches that are under their surveillance, it will be an unmistakable signal of movement. If it deals with switches sufficiently separated one with the other, it then implies ample movement.

The connection of the tracks, one with the other
and with the exterior connection terminals are
made on the other side of the support. The connections between two faces are made by means of
metallized drills or a similar technique.

In order to obtain the switch lines shown in
figure 29, we will rely especially on the procedure
described in item 2 and represented in figure 15.

In this procedure the lines of figure 29 would be
like conductor lines (as the H11 in figure 15),
surrounded by a base which also acts as conductor
(like H10 in figure 15). The connections between
the different tracks and with the exterior are
carried out in the back face, access to which is
prvided by means of metallized drills.

6. Sensor for normally closed or normally open
   monitoring lines

We will describe below a sensor which, in order to
pick up position changes in objects that have to
be protected against theft, may be placed in any
position, allows the selection of amplitude of
movement to which it must respond, produces and
opening of normally closed circuit in response
to a movement, and does not consume current.

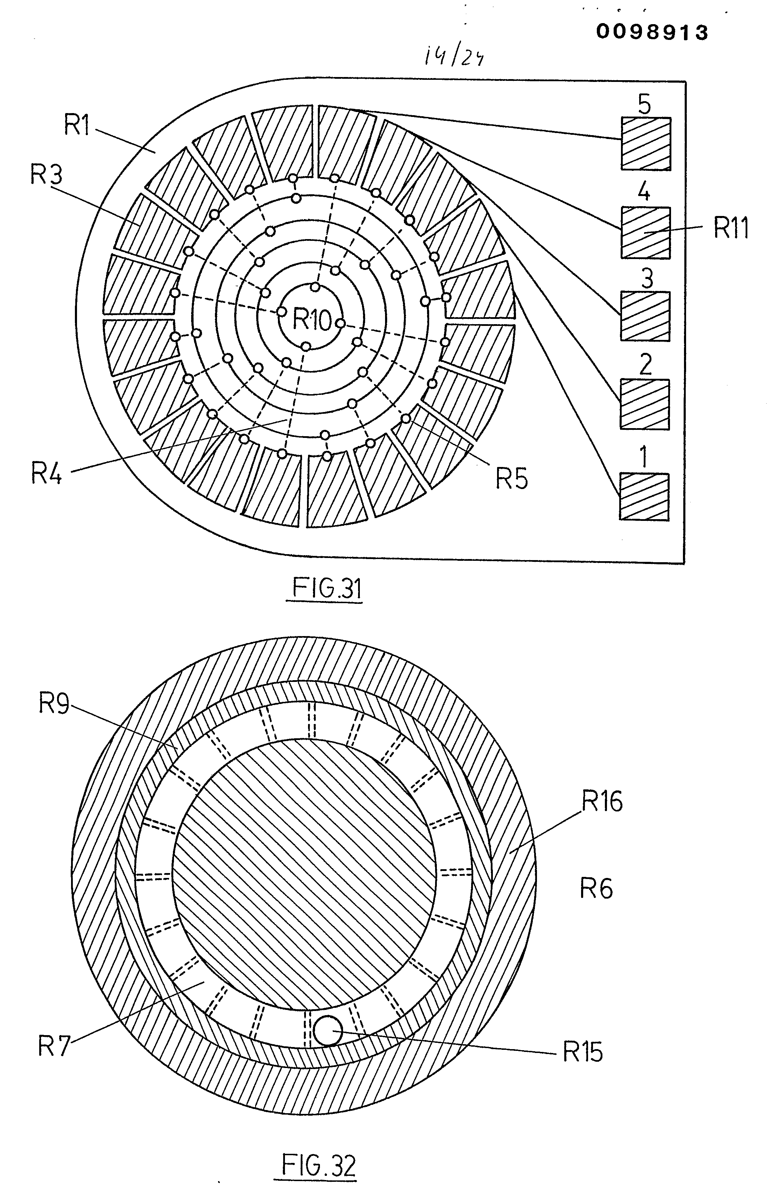

Figure 31 shows some conductor tracks of the
electricity Rl in a circular configuration. The
drawing of this figure represents  a double face
printed circuit with metallized drills. In black
(or with shaded area), are shown the metallic
tracks of the upper face R3; in dotted lines the
metallic tracks of the back face R4; as black
circles R5 the metallized drills which connect
the upper tracks with the lower ones. This drawing
shows a sequence of tracks (in this example five),
which is repeated throughout the circumference:
1, 2, 3, 4, 5, 1, 2, 3, 4, 5, 1, 2, etc. All of
the tracks 1 are interconnected, and the same applies
to 2, 3, 4 and 5. The connections between tracks
of the same type are made in the zone R10 of the
printed circuit (figure 31), using to this end
tracks on the two faces and metallized drills. Each
set of tracks of the same type is connected to a
track on the edge of the plate for connections with
the exterior R11. Between two contiguous tracks
in the circumference of figure 31 is the right space
so that there is no electrical contact; therefore,
the contiguous tracks are very close.

This set of tracks, as described herein, is used
as a base of a container which is shown in figure
33, in section, and in figure 32, viewed from above,
and without cover. R12 is the aforesaid base, R13
and R16 are insulation material washers of the electricity, R9 is a metallic washer with an interior  diameter less than that of R13 and R16, R6 is a cylinder which, together with the previous elements, forms the channel R7 in which moves a conductor sphere of the electricity R15, and finally as cover R14 will be provided a printed circuit plate similar to R12, and which has equal tracks face to face with those of the base. The tracks, of one type, of the top are electrically connected to the tracks, of the same type, of the base. In short, all the tracks of one same type are connected to a track of the edge. The conductor sphere can run over the tracks R1, resting on the conductor guide (metallic washer) R9.

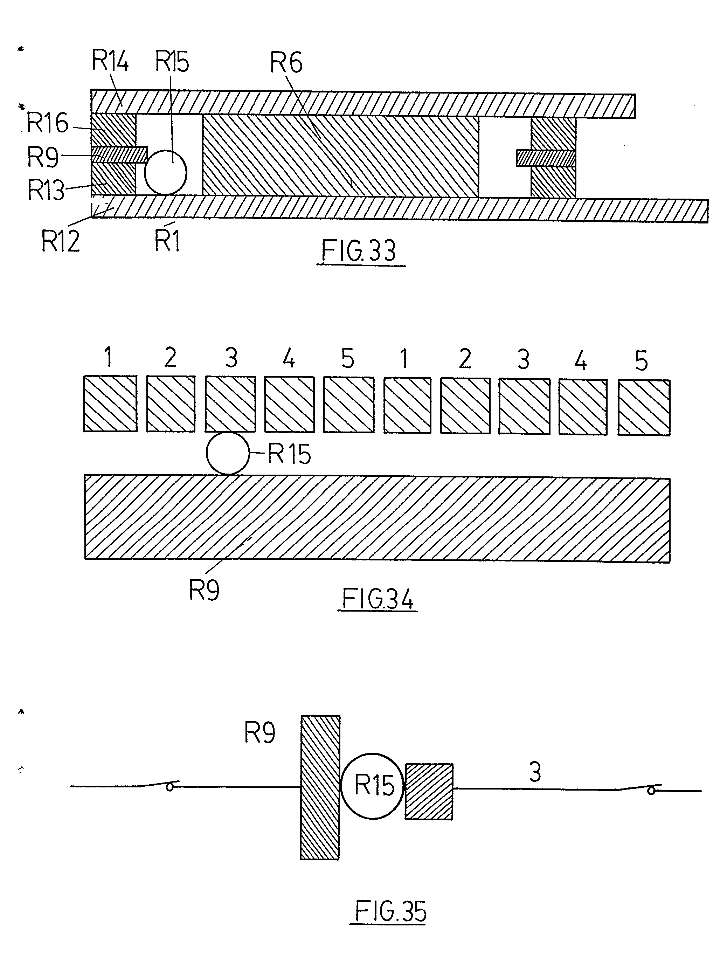

When the container moves, the conductor sphere is displaced on the tracks, putting the conductor guide R9 in contact with the successive tracks. The corresponding electrical diagram is shown in figure 34. The conductor sphere is always in contact with any of the tracks. If said sphere is on the dividing line of two tracks, it will come in contact with the two simultaneously, since the tracks are very close to each other.

The manner of using this sensor is as follows:

The sensor is placed in the object to be protected in any position.

The sphere will always be bringing the conductor guide R9 in contact with one or two tracks.

By means of a continuity checking apparatus, we can tell which track is in contact with the conductor guide R9. In our example (figure 34), contact is made with track 3.

Figure 35 shows how the installation of this sensor is carried out on a monitoring line with normally closed switch.

As we can see, it remains in closed line, thanks to the contact of the guide R9 with track 3 through the conductor sphere R15, which rests on both.

When the slightest movement is produced, the sphere moves inside the the circular channel and stops resting on track 3, then comes to rest on the adjoining track. With it, the monitoring circuit opens and the alarm center picks up the movement.

With the sensor thus installed, and if the successive tracks are very narrow, a higher sensitivity to movements is obtained, starting from its home position.

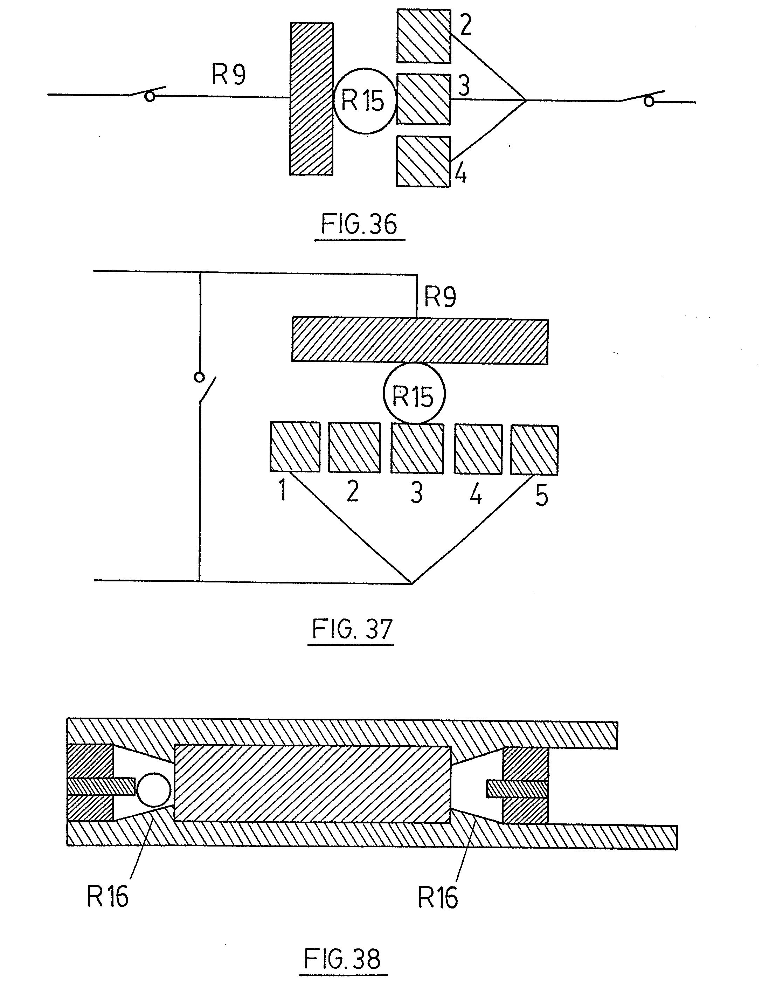

If a lesser sensitivity is desired, the contiguous tracks (2 and 4) are connected, together with 3, to the normally closed monitoring circuit, as shown in figure 36.

In this case, a more ample movement is required to allow the conductor sphere to leave the zone 2-3-4 and, with it, opening the monitoring circuit.

With this idea, and adding side tracks, sensitivity is reduced.

Having different n tracks in a sequence, some n/2 sensitivity levels are obtained.

The use of repetitious sequences is necessary in order to obtain high sensitivity levels (very narrow tracks) with few connections to the exterior R11 (figure 31).

The sensor set, and the connections that are made on it, are kept inside a box with a normally closed switch, which opens when the box is opened. This switch is series-connected with the monitoring line. In this manner, if someone opens the box to manipulate the sensor, the monitoring circuit opens and the maneuver is picked up by the alarm central.

If it is desired to use this same sensor in monitoring lines with normally open switches, this is also possible. Figure 37 shows how it is done. In the first place, it can be seen, with the continuity meter, on which track is the conductor sphere; subsequently, the guide R9 and, at least, two tracks close to either side of the sphere are connected. The closer these two tracks are to the sphere, the higher is the sensitivity.

The sensor provides, in this manner, a normally open circuit. When the sphere moves, the circuit closes touching the connected tracks (1 or 5 in our example in figure 37), putting them in contact with the guide. The box which contains the sensor will also have an anti-sabotage switch, in this case normally open.

Improvements within the described general concept
may be introduced, in the geometry of the device:
Figure 38 shows how the surface with tracks has
a conical shape which improves the support forces
of the conductor sphere with the guide and the
tracks R16.

With the sensor, the object of this patent, series-
mounted as normally closed circuit, the monitoring
current passes through the support point of the
mobile conductor body over the conductor tracks and
over the conductor guide, as the case may be. If a
vibration is produced, the sphere will push out over
the tracks, thereby producing very short disconnection
impulses. Analyzing this signal of short impulses, we
can pick up vibrations and blows as is being done
in the actual technique of alarm systems. In order
to pick up only ample movements, as described in
this description of the invention, we will have to
place a filter which eliminates electrical noises
and the aforesaid short power cutoffs. These two
functions can be obtained simultaneously by analyzing
the signals before and after filtering.

7. <u>Complement for the movement sensors</u>

In the previous sections, movement sensors have
been described wherein a mobile conductor body,
upon its displacement over conductor tracks of
the electricity, operate a warning mechanism such
as a siren or similar one. The conductor tracks
are easily prepared on a printed circuit surface,
but a container has to be constructed which, together with said printed circuit, holds the mobile
body. This mobile body may be a conductor sphere.

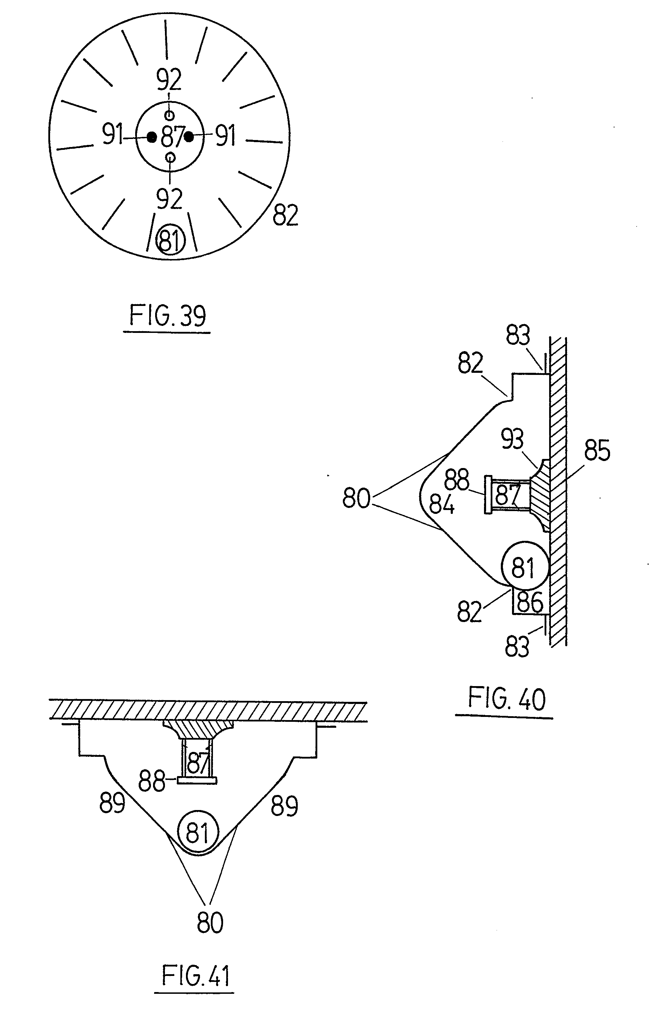

Figure 39 shows the zone of the printed circuit
in which the conductor sphere has to move. The
conductor 82 delimits this zone. The element 81
is the conductor sphere. The metallic tracks of the
printed circuit are not drawn for greater simplicity.
It is convenient that this printed circuit should
contain the electronic circuits, in this manner
the connections of the tracks of the sensor with
the electronic components are made by means of tracks
of said printed circuit, and connections with cables
are not necessary. The contour 82 of the premises
is formed by curves, more or less closed, depending on the characteristics that are to be obtained.
In this case, we have used a circumference, but it
could be an ellipse or another closed figure.
The conductor sphere 81 has to move over the
printed circuit within the contour 82. Figure 40
shows a section of the container which holds the
conductor sphere. This container is formed by the
printed circuit 85 and a piece of non-conductor material of the electricity 80, which may be perfectly plastic as shown throughout the contour
by the forms 84, 83 and 82 in figure 40. The form
82 is the one that keeps the conductor sphere 81
on the required path. The form 83 serves to attach
the plastic piece to the printed circuit. The height
of the zone 86 is somewhat greater than the radius
of the sphere 81. In this manner, with the printed
circuit in a vertical position (figure 40), the
sphere fits slightly between the contour 82 and said
printed circuit, applying greater pressure on the
tracks of the printed circuit and thereby making
better contact. The function of the form 84 is shown
in figure 41:

By placing the container with the printed circuit
upwardly, the conductor sphere remains in the base
of the non-conductor piece  80 and far from the conductor tracks. In this position the conductor sphere
will not touch the tracks even though relatively
brusque movements are produced. Now then, when the
set makes a ninety-degree turn and places the printed
circuit vertically (fig. 40), the sphere will again
touch the printed circuit tracks. This is useful to
maintain the sensor in surveillance in the suitcase
during a trip. The suitcase is horizontal and the
movements of the trip do not produce an alarm because
the sphere does not touch the printed circuit. If
at any stop, someone removes the suitcase from the
luggage rack, the container will be positioned as
shown in figure 40, the sphere will touch the tracks,
and the alarm will be activated.

Figures 39, 40 and 41 show other elements which have
not yet been explained. The elements 87 are conductor
bars viewed from above in figure 39. The black bars
91 in figure 39 are alos interconnected electrically.
Between the bars 91 and 92, there is normally no electrical contact. The element 88 is a circular piece of
non-conductor material where the bars 87 end. With
the container in the position shown in figure 39
(printed circuit vertical and sphere below) and having
previously disconnected the monitoring of the tracks
of the printed circuit, the sphere will move along
the circular contour without producing an alarm. If
we carry the sensor in this position in a hand-carried
satchel, the sphere will move along the circular
contour without touching the bars 87. If someone
snatches the satchel brusquely and runs off with it,
the sphere will jump and touch the bars 87. The contact
between two contiguous bars makes the circuit between
the type 91 and type 92 bars. The function of the
non-conductor element 88 is observed better in figure
41. The position of this figure is adquate for transport
by cars as has been mentioned. The violent jerks of the
car might lift the  sphere and make it reach the tracks
without rotation of the sensor. The piece 88 avoids
this fact which would mean a false alarm during the trip.
The space between this piece 88 and the lateral parts
89 (fig. 41) of the container have to be exact to allow
the sphere 81 to roll along. In case it tries to jump,
it will be hampered by the piece 88. The role of the
pieces 93 (fig. 40) is to keep the conductor sphere
from touching the bars 87, unless a brusque movement
is produced.

8.  <u>Portable alarm system based on this sensor</u>

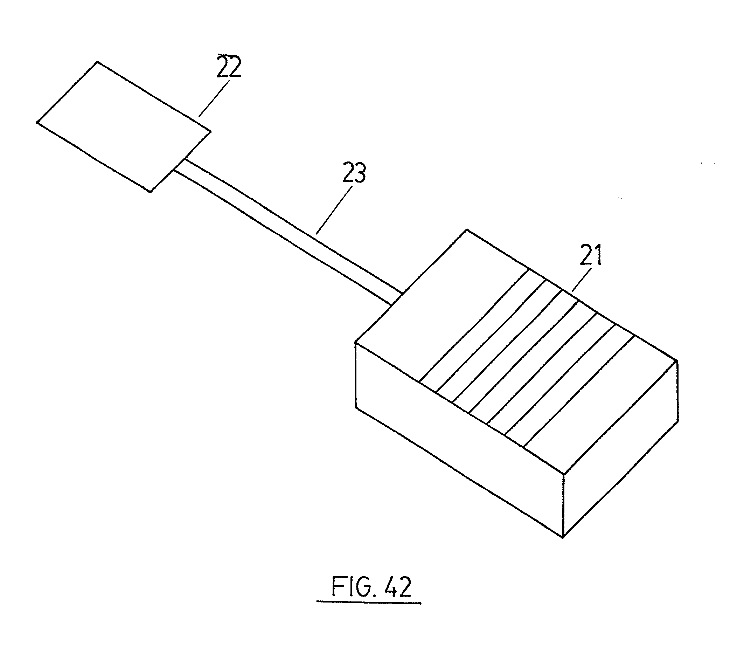

The purpose of this device is to provide protection
against theft in highly different situations and
without the need of installation. Its usefulness
is especially appraised in the different situations
that appear during trips. The aspect of this alarm
system is shown in figure 42.

- 21 is the box in which are found the electronic
  circuits, the siren, the batteries and the movement sensor.

- 22 is the keyboard in which the adequate combinations are pressed for activating and deactivating the alarm.

- 23 is a flexible cable which joins the keyboard
  with the box.

The procedure for its use is the following:

- The alarm "21" is placed on or inside the object
  to be protected and is activated by means of
  the adequate combination in the keyboard "22".

- Starting from this moment, if someone tries
  to take off with the protected object, the
  body of the alarm will move, the sensor will
  pick up the movement, and the alarm will sound
  immediately.

- After a certain time, the siren will stop
  ringing and the device will continue monitoring.

- Upon returning it will suffice to press on the
  keyboard the adequate combination to deactivate
  the alarm and separate it from the object it
  protected.

It will be appraised that it is important to have
the three aforementioned elements: box, keyboard
and flexible cable. This allows activating and
deactivating the alarm by means of the keyboard
without moving the sensor and, therefore, avoiding
false indication of the siren.

9. Electronic circuit suitable for this portable alarm
   system

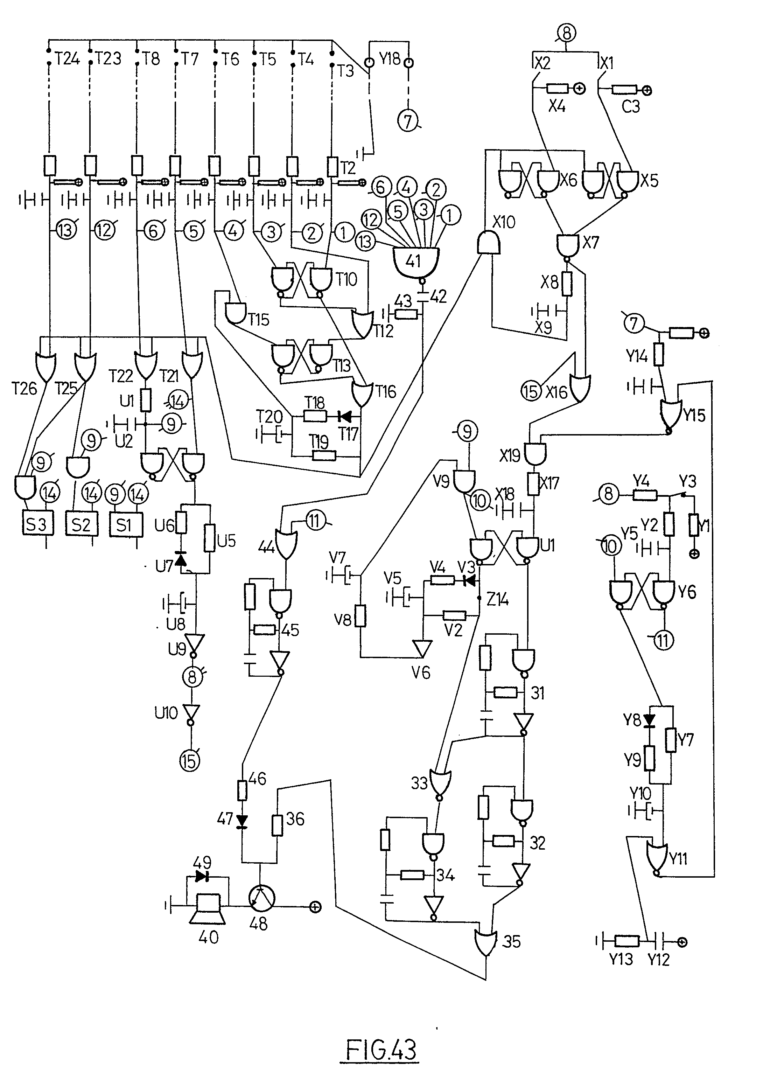

In figure 43, we have the diagram of the electronic
circuit suitable for this portable alarm system.

Before going into the description, it must be clarified that, in the diagram,

- The rectangles such as T1 represent resistances.

- The crossed lines do not mean connection in any case.

- Two little circles with the same number mean that both points are interconnected although the corresponding line is not drawn. The tiny tracings in the little circles indicate the direction of the other point to which it is connected.

- The dotted lines near T3 and elements on its vertical are the cables leading to the  keyboard. In the keyboard are the sensors T3 to T8, T23 and T24, and the pin T18.


9.1.  Keyboard and combination

To ascertain that the keys T3 to T8 are the touch type, the resistance T1 and similar ones must be from five to twenty megohms.

Press one of these keys, which consists in touching simultaneously the two corresponding plaquettes. In doing so, a resistance in the order of one megohm is established between them. With it, and in the case of T3, the common point of T1 and T2 is adjusted at zero logical level.

By pressing T3, the bistable T10 is activated (its upper output is adjusted to one and the lower one to zero).

By pressing T4 afterwards, the output of T12 is
adjusted to zero, and the bistable T13 is activated.

By pressing T5, T10 is deactivated. At this time,
the output of T16 is adjusted to zero, and the condenser starts discharging through T19.

In this situation, the upper inputs of T21, T22, T25
and T26 are at zero.

If, in these conditions, T7 is pressed, the output
of T21 is adjusted to zero, this is the connection
order.

If, in these conditions, T8 is pressed, the output
of T22 is adjusted to zero, this is the disconnection
order.

When the condenser T20 starts discharging, the bistable
T13 is deactivated, and the output of T16 is again
adjusted to one. The condenser T20 is rapidly charged
through the diode T17 and the resistance T18, thereby
reverting to initial conditions. To ensure that charging
of the condenser T20 is as fast as discharging, the
resistance T18 has to be much lesser than the resistance
T19.

The pulsator T6 deactivates the second bistable, blocking
the combination. This is useful in manipulations on the
part of intruders.

The pulsators T23 and T24 are used to actuate on the
bistables "S" of sensitivity control.

9.2.  <u>Control circuit</u>

It is a bistable the states of which correspond
to a monitoring and inoperative situation, respectively.

Upon feed connection, the charging of the condenser
U2 causes the lower input of U3 to remain at zero
for a moment. With it, this bistable will appear
deactivated.

Upon adjusting to zero the output of T21, the
bistable U3 is activated, and the condenser U8
is slowly charged through the resistance U5.

When this charging is completed, the output of
U9 is adjusted to zero level. This is the monitoring situation. ·

It will be noted that the circuit starts monitoring
some time after the corresponding combination has
been pressed (output timing).

When the output of T22 is adjusted to zero (for
disconnection  of the alarm), the bistable is deactivated and the condenser U8 rapidly discharges
through the diode U7 and the resistance U6. The
resistance U6 is of a far lesser value than U5.

This control circuit has a dual function: In an
inoperative situation, it keeps the sensors from
actuating and causes the signals proceeding therefrom to remain blocked before reaching the siren timer. In a monitoring situation it causes the sensors to actuate, and the signals therefrom have access to the siren timer.

## 9.3. Analyzer circuit of pulses proceeding from the sensor

This circuit is a concrete example of the one described in section 1.1. and shown in figure 9.

When a movement is produced, the switches X1 and X2 close alternately.

This means activation of the bistables X5 and X6, and adjusting to zero the X7 output.

The condenser X9 discharges through X8.

When X9 has discharged, the bistables X5 and X6 are deactivated, and the X7 output returns to one.

In short, the movement has supposed a zero adjustment pulse in the X7 output.

This impulse is transmitted through X16 and X17.

Only adjustment to zero signals of a duration in excess of a determined value pass through the set X17-18.

The gate X16 blocks these pulses of adjustment to zero of the alarm is not monitoring (condenser U8 charged and output of U10 at level one).

The gate X19 transmits to X17 the adjustment to zero
signals proceeding from this analyzer circuit (lower
inlet) and also transmits similar signals proceeding
from the other sensors (upper gate).

The lower input of X10 is adjusted to zero at the
start of monitoring to deactivate the bistables
previously.

## 9.4. Sensitivity control

In speaking of the electronic analyzers of the
movement sensors, it has been seen that control of
the sensitivity levels is carried out by means of
the states of bistables which, in all cases, have been
designated with the letters S: S1, S2, S3 ........

Figure 43 shows how these are controlled.

The minimum sensitivity level is obtained with the
bistable S1 activated, and not the others.

The average level is obtained with the bistables S1
and S2 activated, and not S3.

The maximum sensitivity level is obtained with the
three bistables activated.

The manner of obtaining these situations by means
of manipulations on the keyboard is simple.

In the first place, the alarm activation combination is pressed. In this manner, by means of teh connections 14 the three bistables S1, S2 and S3, which are similar to the others of the diagram (for example the U3), are activated. The maximum sensitivity is thus obtained.

If an average sensitivity is desired, the pulsator T24 will be actuated during the time that T16 is at zero level, and with it the bistable S3 is deactivated, and only S1 and S2 remain activated, thus corresponding to an average sensitivity.

Low sensitivity is obtained by actuating, during the time that T16 is at zero level, the pulsator T23; with it the bistables S2 and S3 are deactivated and only S1 remains activated, thus corresponding to low sensitivity.

Upon pressing the deactivation combination, T22 adjusts to zero, the points 9 adjust to zero, and the three sensitivity bistables S1, S2 and S3 are deactivated. This deactivation is not indispnesable, but it is necessary in light of a greater reliability in an inoperative situation of the alarm

9.5. Alarm timer

It is formed by the elements characterized by the letter V.

Its function is to control the time that the alarm
has to be sounding.

The bistable V1 is activated when the upper input
is adjusted to zero.

In this case, the upper output is adjusted to one
and the lower one to zero.

The condenser V5 starts discharging slowly through
the resistance V2.

When the voltage of the condenser V5 drops to levels
corresponding to the zero logical value, the output
of V6 also drops to zero and the condenser V7 discharges through the resistance V8.

When the condenser V8 drops to zero level, the output
of V9 also drops to zero level, and the bistable deactivates.

Upon deactivation of the bistable, its lower output
adjusts to level one and the condenser V5 rapidly
charges through the diode V3 and the resistance V4.
The resistance V4 is of a value much lesser than V2.

The bistable also deactivates when T22 is adjusted
to zero (disconnection order), since the upper input
of V9 adjusts to zero and, with it, the lower input
of the bistable V1.

The role of the set V7-V8 isto avoid instabilities when
we have an insistent alarm signal at the upper inlet, for example, when a door or window is open. In this
case, the delay provided by the set V7-V8 causes,
in the first place, V5 to discharge below the limit
level corresponding to zero, and later causes V5
to charge completely before starting a new alarm
cycle.

## 9.6. Alarm circuit of the normally closed type

When the alarm is not monitoring, the resistance
Y4 is connected to a positiv potential in the U9
outlet. In this case, even though the alarm circuit
Y3 opens, the upper input of the bistable Y6 does not
undergo a variation.

When the alarm system is in a monitoring state, the
output of U9 is at zero logical level. If, in this
situation, the alarm circuit Y3 opens, the upper
input of the bistable Y6 adjusts to zero Y2, Y4.
The bistable Y6 is activated, and the pre-alarm
time then starts.

During prealarm, the lower input of Y6 is at zero
level, and the condenser Y10 discharges slowly
through Y7.

When Y10 has discharged, the Y 6 output is a zero
level, and the condenser Y10 discharges slowly through
Y7.

When Y10 has discharged, the Y11 output adjusts to
level one, the outputs of Y15 and X19 to zero level,
and the siren timer is activated.

The deactivation of this bistable Y6 is due to the
drop to zero of the gate V9, and this occurs when the
foreseen siren time is over, or when the disconnection
combination is pressed.

When the bistable Y6 is deactivated, the lower output adjusts to level one, and the condenser Y10
chargesrapidly through Y8, Y9 (the resistance Y9 is
much lesser than Y7). As a result, it is immediately
ready for a new operation.

The role of the set Y12-Y13 is to keep the instabilities,
upon connecting the batteries, from sounding the alarm.

During the time it takes to charge Y10, the siren
is sounding when the batteries are placed. But counting on the set Y12-Y13, this does not happen. While
Y12 is being charged, the lower input of Y11 is at
level one, its output at zero level and, as such,
the siren will not sound.

The normally closed alarm circuit Y14 is always
monitoring. It protects the cables that run to the
keyboard and, furthermore, is is completed with a
pin "Y18" in said keyboard.

If someone cuts the cable or removes the pin, the
lower input of Y15 will adjust to level one, its
output at zero level and also that of X19, thereby
activating the alarm.

9.7. Accustic indicator of pulsations in the keyboard

In order to give the user reliability in the use of
the touch keyboard, the fact that the pulsation has
been effective is made known by means of a sound
pulse.

Upon actuating any of the pulsators, the output of
41 is adjusted to level one, 42 is charged through
43 and the lower output of 44 adjusts to one during
a short time.

Within this time, the output of 44 will be at one
and the square wave generator 45 will be actuating.

This square wave is transmitted through 46 and 47
to the transistor 48 and sounds the loudspeaker 40
during a short time.

## 9.8. Prealarm indicator sound

During the prealarm time, the upper input of 44 is at level one, the square wave generator 45 is operating and, by means of 46 and 47, actuates the transistor 48, thereby sounding the loudspeaker 40 and indicating the prealarm.

The signals proceeding from 45 come across the voltage reducer in the set 46-36, since the output of 35 is at zero.

Depending on the values of 46 and 36, different voltages will be obtained in the signals applied to the base of the transistor and, with it, different levels in the sound intensity.

In this manner, the effective prealarm and pulsation signals will have a reduced sound level in contrast with the siren signals proceeding from 35.

The diode 47 causes this set 46-36 not to actuate the voltage reducer for the signals proceeding from 35, which are those of the siren.

## 9.9. Bitonal siren

When the siren timer Vl is activated, its upper output is at level one and the lower one at zero level.

As such, the square wave generator 31 will be actuating and the gate 33 will actuate as inversor for the signals proceeding from 31.

When the output of 31 is at level one, the square wave generator 32 will operate, but not 34.

When the output of 31 is at zero, 34 operates but not 32.

The oscillations of 32 and 34 are both transmitted to the outlet of 35 and cause the loudspeaker 40 to sound with great sound intensity by means of the transistor 48.

Evidently, the transistor 48 may be substituted with a Darlington amplifier which will provide better services.

With this, the operation of this electronic circuit is sufficiently explained, it being understood that this deals with an example within a general concept. Any circuit inspired along the essential lines herein described is considered to be included within the protection of this Patent.

10. <u>Coupling for supplementary siren</u>

This coupling for supplementary sirens in alarm systems uses only two cables for the connection of an auxiliary alarm in the following functions:

The auxiliary siren operates when the alarm central picks up an intrusion.

The auxiliary siren will also sound when the connecting cables are cut.

The auxiliary siren will also sound when the connecting cables short-circuit.

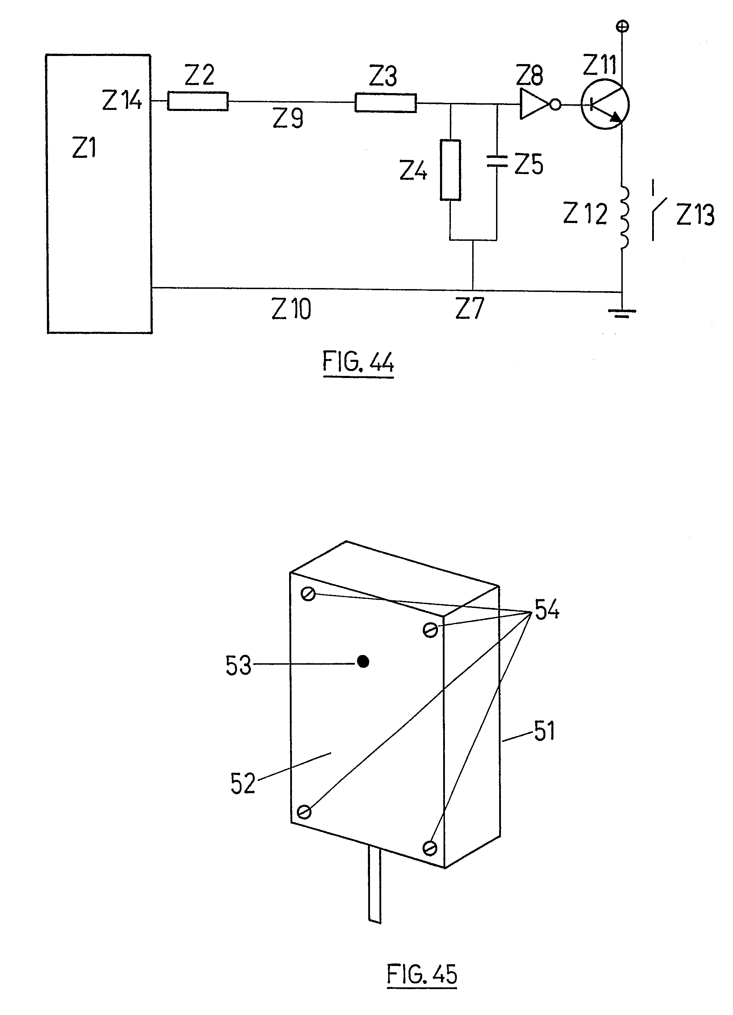

Figure 44 shows the elements of the connection:

- Z1 is the main alarm.
- Z8, Z11, Z12 is the set that activates the auxiliary siren, closing the circuit Z13 of the relay.
- Z9 and Z10 are the connecting cables.
Z7 are the mass connections of the main alarm and the auxiliary alarm jointly set.
- Z2 and Z3 are protective resistances at the ends of the upper connecting cable.

The zero logical level will be that corresponding to the mass voltage, and the logical level one that corresponding to the feed voltage (in our example positive). Both the main alarm Z1 and the set which activates the auxiliary siren have their own power supply; however, as has been seen, both have mases jointly set.

The main alarm normally supplies to the connection Z9 the logic level one (positive potential), whether said main alarm is inoperative or monitoring. The main alarm adjusts the connection Z9 to a zero logical level only when a situation of intrusion is produced in a monitoring state. In this case, the input of
the inversor Z8 drops to zero, its output adjusts
to one, and the relay Z12 is activated by means of
the transistor Z11 and the connection Z13 is closed,
which causes the auxiliary alarm to sound.

The point of the alarm system at which voltage is
fed which is normally level one; and which, in an
alarm situation, is zero, is point Z14 in the diagram shown in figure 43 (the lower outlet of the
bistable V1).

In case of a sabotage, if the cable Z9 is cut, the
input of the inversor Z8 adjusts to zero through the
resistance Z4, and the auxiliary siren is activated.
If the cables are manipulated and Z9 and Z10 shortcircuited, the input of the inversor Z8 also adjusts
to zero, and the auxiliary siren is activated.

The role of the condensor Z5 is to filter electrical
noises.

11.  Adequate fastening system for the portable alarm

A procedure for securing the alarm to the object which
it protects will be described below. The point in mind
is that the alarm cannot be detached from the object
without sounding the siren.

Figure 45 shows the layout of the elements which make the securing useful; 51 is the alarm box, 52 is the base on which said box normally rests, 53 is a threaded orifice through which may be inserted a screw, threaded rod, etc.; 54 are the screws which close the alarm box. It is interesting that the closing screws 54 should be on the same face as the threaded orifice 53; in this manner, securing by means of 53 will prevent that the box may be opened without first dropping it.

By means of the threaded orifice (53), highly varied securings may be established. Let us take a look at some examples:

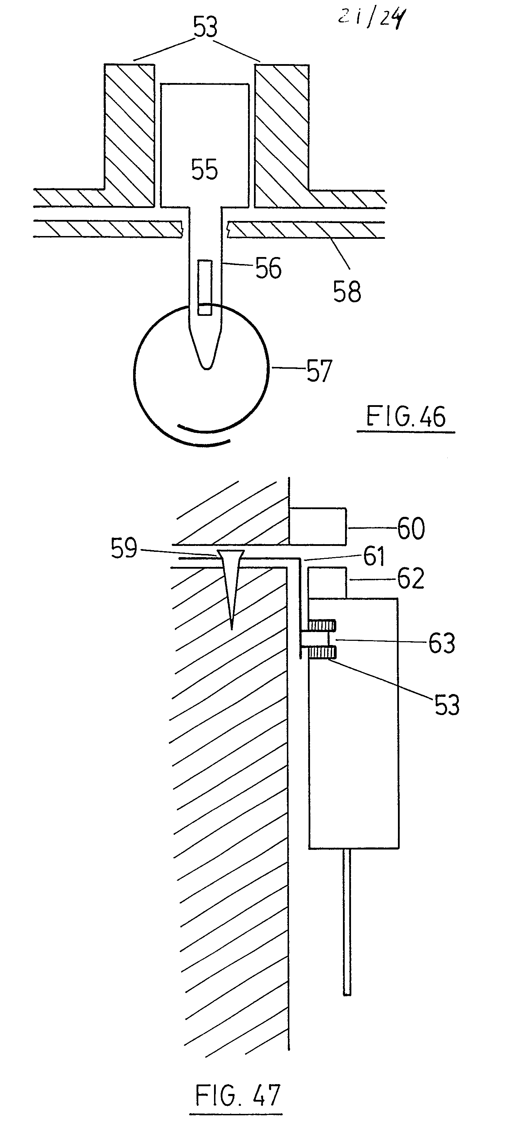

Figure 46 shows how the alarm is attached to a suitcase whithout hardly damaging it. 53 is the threaded orifice through which the threaded rod 55 is inserted. This rod has a needle 56 which is driven into the leather of the suitcase (58). The needle 56 has an eye in which is placed a pin (57) which keeps said needle from being extracted. The suitcase will have to be opened in order to release the alarm. If the alarm is activated, this is not possible without sounding the alarm. It will be noted that, both in this drawing and the following ones, a section of the assembly is shown for greater clarity.

Figure 47 shows the manner of securing the alarm to the door without damaging this in its visible part. The square 59 has a threaded rod 63 in which the alarm is placed. On th other hand, said square is screwed to the door at its upper parts (screw 59), thus avoiding drilling at a visible part. In all the fastenings,
the alarm has to be rotated around the threaded rod
to release it. This is not possible with the alarm
activated, since the siren will sound. The element 62
is a magnetic sensor connected to the alarm. The element
60 is a magnet necessary for actuation of the magnetic
sensor.

## 12.  Alarm via radio

The described movement sensors allow the carrying out of
a  more interesting monitoring system with transmission
via radio.

The basic elements are movement sensors herein mentioned
with radio transmitters. The movement sensor has controlled
sensitivity as described hereinabove. The radio transmitter has a control for the selection among various
signals to be transmitted. These controls may be inside
the box which contains the sensor. Every time the sensor
moves, a signal is emitted. The different signals emitted imply different orders: an order can set the siren
going, another signal may correspond to the blocking
of a door, etc. The central receiver picks up the
signal emitted, interprets it and sets in motion the
mechanism corresponding to the signal received.

The advantage of this system is that the sensors may be
placed as desired in objects, furniture, drawers, etc.

It is not necessary to level them, and the objects
may be changed from their place or position when the
central is not monitoring. Furthermore, the desired
sensitivity may be selected, in each case, by means
of control which the sensor has.

The monitoring central has a receiver which, apart
from collecting  the signals proceeding from the sensors, interprets them and sends a signal by means
of a control line to the mechanism which corresponds
to the signal received. If the central is not in a monitoring situation, no mechanism will be operated.
The central may be in a partial monitoring situation;
in this case, only some of the control lines transmit
the control signals to the corresponding mechanisms, the
rest of the control lines are blocked by means of an
adequate system, which may be a switch. Its usefulness
may be seen in an example: If, from a house, it is
desired to watch a car parked out in the street, a
movement sensor, of the aforementioned ones with its
corresponding transmitter, is left inside said car.
It is provided with a sensitivity that is not too high
so that any possible slight blows, from another car
that is being parked, do not produce an alarm; all
the control lines that are not to be used, with the
exception of the car sensor, are blocked. This control
line is connected to an acoustic indicator that can
be heard all over the house, but which does not have
an excessive volume. This is sufficient enough to
activate the acoustic signal of somebody tries to
jack up the car and take off with the wheels. If the
sensor is placed under the seat, secured to the car upholstery, all the intruder has to do is sit down to rob the casette and the aforesaid indicator will
activate.

This alarm system may be provided with other sensors
of the types commonly used, connected via radio to
a central in the same manner hereinabove described.

13.    Touch keyboard for the portable alarm

In delving on the electronic circuits of the portable
alarm, it has been stated that control is carried out
by means of a touch keyboard. The details of this
keyboard are described below:

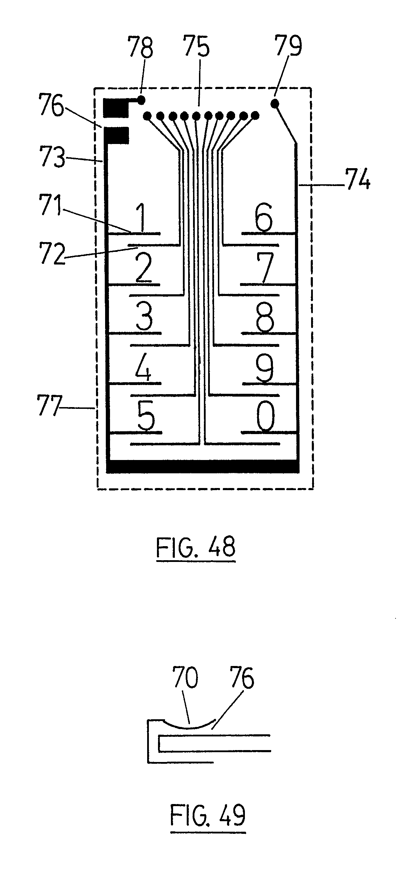

Figure 48 shows a drawing of the metallic tracks which
make up the keyboard. Each pulsator consists of two
plaquettes and a number. For example, the first sensor
is formed by plaquettes 71 and 72. The lower plaquettes
are all connected to points 73 and 74. The upper plaquettes have independent connections which lead to zone 75.
Touching simultaneously with the finger the two plaquettes of a pulsator decreases the resistance between them
to one megohm approximately. This situation can be
picked up perfectly by adequate electronic circuits,
which will actuate in consequence. Zone 75 shows two
points where the cables leading to the alarm central
will be welded.

Between points 78 and 79 is a circuit which surrounds
the whole keyboard, and which is open in zone 76.

Figure 49 shows how a strip "70" press-fitted on the aforesaid zone 76 gives continuity to the circuit between points 78 and 79. In this manner, a normally closed circuit is obtained, corresponding to the pin Y18 which has already been mentioned in describing the electronic circuit, and which is shown in figure 43. The pulsators of this keyboard correspond to T3, T4, etc., which are situated below the pin Y18 in the figure.

14.    Complement for the movement sensors

A simple element has been described in section 7 which, coupled with a printed circuit prepared with adequate tracks, constitutes a very effective sensor. In this section will be described an element, far simpler, which also permits constituting a container suitable for the functions of these sensors.

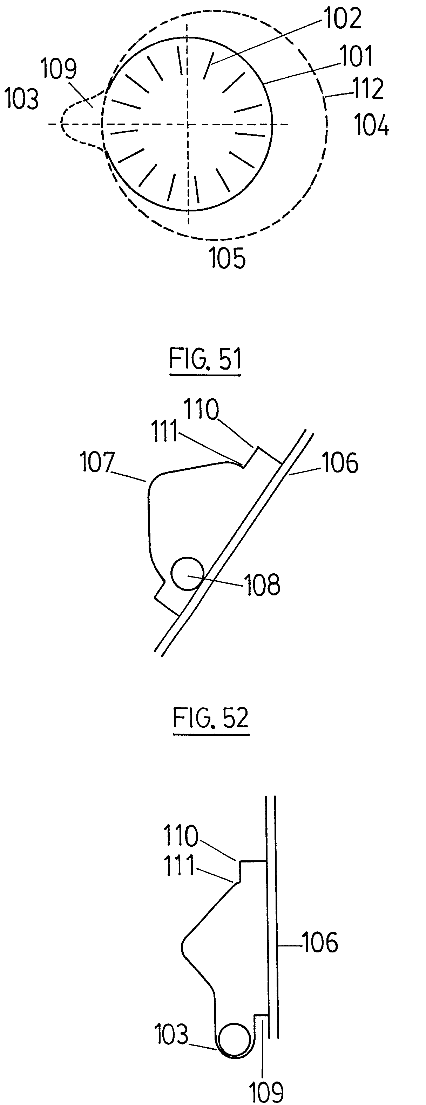

Figure 50 shows the contour of the container 101. A circular contour has been drawn, but it may have any other form. The switch lines are 102. At a given place of the contour, the container presents a peculiar form (103). In order to observe the form and function of this form 103, sections of this container will have to be seen. Figure 50 shows a section according to line 105 of figure 50.

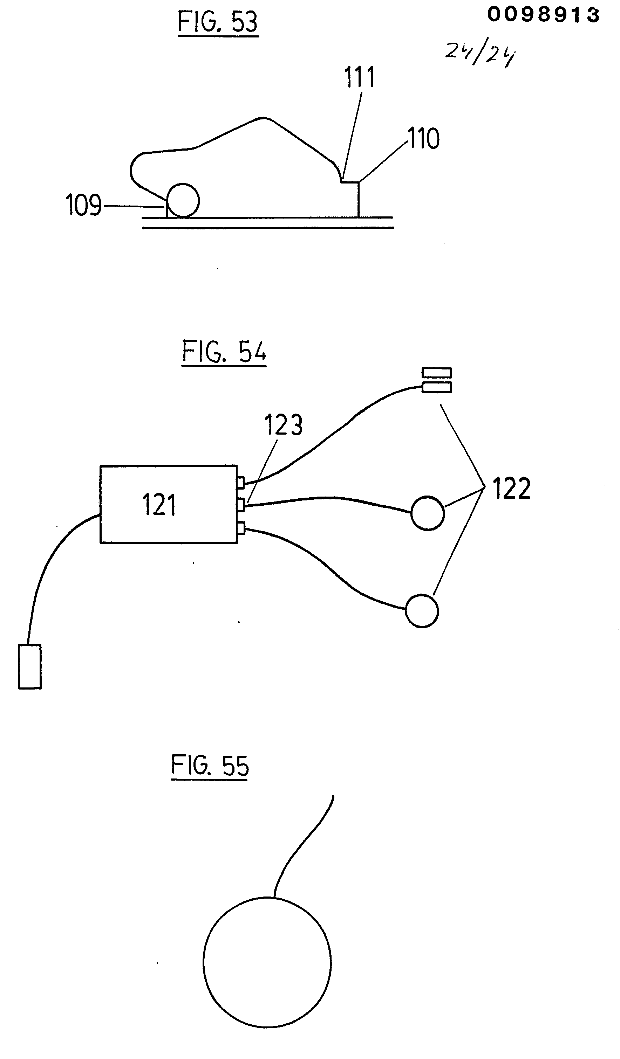

Shown therein is a section similar to that of figures 40 and 41 which performs the same functions: 106 is the
printed circuit, 107 the container, and 108 the conductor sphere. Figure 52 shows the form in section. The
function of this form is to keep the conductor sphere
far from the tracks in a determined position of the
sensor. This position will be adequate for transport
by hand or by car. The normal movements of said transport do not manage to remove the conductor sphere from
the cavity 103. An ample turn will permit the sphere to
come out of said cavity and approach the tracks, thus
producing the corresponding indication of movement. The
advantage of this form is that, in a horizontal position
(figure 53), the sensor maintains its normal sensitivity,
thanks to the fact that the zone 109 follows the circular
path 101 of figure 50. Figure 50 allows a good comprehension of how the circular contour, in which the sphere
rests, is carried out. The solid line 101 corresponds
to form 111 pf the section (figures 51, 52 and 53).
The dotted lines 112 correspond to the side walls of
the container 110 (figures 51, 52 and 53). In zone 109
(figures 50, 52 and 53) the solid line 101 (figure 50)
and the broken line 112 (figure 50) coincide, that is,
in zone 109 the wall 110 of the container coincides
with the contour in which the sphere rests. Furthermore,
in zone 109 (figure 52), the height of the wall is
somewhat lesser than the radius of the sphere. The
purpose of this is that said sphere cannot maintain
itself on said wall 109 when the printed circuit 106
is vertical.

- 59 -

## 15. Final notes

It is common sense to think that, to the alarm described in section 8, whose electronic circuits are described in section 9, may be added, by means of adequate connectors, other sensors of any type by using the normally closed circuits Y3 and Y18, or even adding other conventional circuits. Other movement sensors may also be added, for which as many analyzers as may be necessary would be prepared; all of them similar to those previously described. For these supplementary sensors, immediate response of the siren may be anticipated ( as in the case of Y18 and the movement sensor X1-X2) or delayed response (as in Y3), a concrete example of what is being described is shown in figure 54, and in which 121 is the alarm, 122 the supplementary sensors and 123 the connectors. Evidently, all of the exterior connections will be protected by a normally closed monitoring circuit, as in common alarm systems.

To this alarm may also be applied any of the known remote-control procedures for its control (ultrasounds, electromagnetic waves, magnetic induction, etc.). I consider that this medium neither presents any innovative feature.

The role of the sensitivity bistables S1, S2, S3 may be carried out by means of switches. It is a more primitive procedure which does not allow the selection of sensitivity from the keyboard, but which is more or less equivalent. The aforesaid bistables act as passage control of signals (sections 2 and 4)
or as elements which supply voltage to certain tracks
(section 3). These functions may be performed in an
equivalent manner by means of switches. This change
is considered to be included within the essential
concept of the described sensitivity selection mechanism.

In section 4, a sensor is described in which the conductor sphere receives a determined electrical voltage
from a metallic guide on which it rests. This sphere
transmits this voltage to conductor spheres which it
comes across in its path and on which it rests at
successive times. Figure 55 shows another procedure
which permits supplying voltage to a conductor sphere.
It deals with a conductor thread through which voltage
reaches the sphere. This thread must be sufficiently
flexible so as not to hamper the movement of said sphere.
I consider that this manner of supplying current to the
sphere is public domain and, for this reason, this will
not be claimed.

Movement Sensor

Claims:

1.

Movement sensor characterized as including a conductor
body of the electricity which moves easily over a support
which also has fixed elements of the electricity. When
said mobile conductor body moves over said fixed conductor
elements, successive electrical contacts are established.
This concept permits establishing as many different switches
as desired throughout the path of said mobile body. With
the said body placed in a determined position and in an
inoperative situation, the mobile conductor body will be
positioned at a said support point which supposes a stabile
equilibrium. In this situation, the mobile conductor body
will seek a new stable position and travel a certain space
throughout a curved path, closing switches as cited in
its run. The fact that it closes switches at a determined
point of the path does not indicate movement. The fact that
it closes, at successive times, switches in different zones means that a displacement of the conductor body
has been produced, that is, movement of the sensor.
The distance between the zones wherein closing of
the switches has been produced indicates amplitude
of the movement. If the switches are regularly
distributed in the path of the mobile body, the number
of switches that have been closed at successive times
indicates amplitude of the movement. If the support
presents different curvature radii in different zones,
a different sensitivity will correspond to each zone.
With the mobile conductor in a zone of great curvature
radius, a slight movement will produce a great displacement of the mobile body on the support and, consequently, the closing, at different times, of various
switches.

With the mobile conductor body in a zone of small curvature radius, an ample movement is necessary so that
said mobile conductor body moves and closes, at successive times, several switches, thereby showing movement.
In consequence, the large curvature radii of the support
provide high sensitivity of the movements and, on the
contrary, small curvature radii in the support imply
low sensitivity in the detection of movements. Lastly,
the time that transpires between the successive closings
in two specific switches indicates the speed with which
the movement is produced.

2.

Movement sensor, as defined in claim 1 and further
characterized as being formed by a conductor body
of the electricity which moves easily, resting simultaneously on a guide and on a surface with conductor
tracks of the electricity. When the mobile conductor
body of the electricity rest simultaneously on two
contiguous conductor tracks herein described, it closes
the switch between them. For this reason, a pair of
contiguous tracks constitute, conjunctively with the
mobile conductor body, a switch. On the surface of the
tracks are provided as many switches as desired, and
placing pairs of contiguous tracks for each one of
them will suffice. The aforesaid guide has the function
of ensuring that the path to be followed by the
mobile body is curved. The guide constitutes, as a
whole, a closed line and has zones with different
curvature. In the zones with great curvature radius,
a slight movement of the set supposes a large displacement of the mobile body. In the zones with small
curvature radius, an ample movement will be necessary
to produce a slight displacement of the mobile body.
When the sensor is inoperative, the mobile body is
in the lowest possible zone; it may be closing one of the
aforesaid switches, but never two. When the sensor
moves, the mobile conductor body is displaced, closing
at different times various switches when it rests
on successive pairs of conductor tracks. With this
sensor, different sensitivity levels are obtained,
due to different curvatures which the guide presents
in its different zones:

Large curvature radii offer high sensitivity, since a slight movement of the sensor produces the necessary displacement of the mobile body to close several switches. Small curvature radii of the aforesaid guide require ample movements in order produce the displacement of the mobile body necessary to close various switches.

3.

Movement sensor, as defined in claims 1 and 2 and further characterized by switches of two types in regularly spaced sequences, and in which the time between closings, in the two different switches, indicates speed of the movement.

4.

Movement sensor, as defined in claims 1 and 2 and further characterized by a mobile conductor body of the electricity which moves easily over a conductor track of the electricity which covers the whole surface on which said conductor body moves, except small fringes distributed regularly throughout the path of said mobile conductor body. In these small fringes have been provided fine tracks which are also conductors of the electricity and are isolated from the aforesaid base track. When the mobile conductor body rests on one of these fine tracks and on the base track simultaneously, it closes the circuit between them. These elements constitute, therefore a switch. As many switches and fine tracks have access to the path of the mobile body surrounded by the base track.

5.

Movement sensor, as defined in claim 1 and further characterized by a base track provided with fine rectangular spaces regularly distributed throughout the path of the mobile conductor body. In these small fringes are fine conductor bars of the electricity which constitute, conjunctively with the base track and the mobile conductor body, as many switches as bars. The connection of these bars with the electronic circuits is made by means of conductor tracks on the other face of the support of the tracks connected to the previous ones by means of metallized drills or equivalent system.

6.

Movement sensor, further characterized as interconnecting groups of bars or fine tracks as described in claims 4 and 5. In this manner, switches of the first type, of the second type, of the third type, etc., are obtained. Throughout the path of the mobile body is completed a sequence which has a switch of each type, and subsequently another new sequence is completed with another switch of each type, and so on. In this manner, an electronic monitoring element for each type of switch will suffice. All the switches of one type have their fine tracks in common and the base track as well. Similar evolutions of the mobile conductor body in different zones (sequences of switches) are picked up in the same manner by the electronic monitoring elements.

7.

Movement sensor, as defined in claim 1 and further
characterized by the fact that the switches which
close the mobile conductor body when it moves over
zones with conductor tracks nearby may be fitted out,
or not, that is, whether or not the closing of this
switch with the passage ot the conductor body over
the corresponding tracks is picked up by the electronic circuits. When the switch is not fitted out, the
passage of the conductor body over the corresponding
tracks (closing of said switch) will not be picked
up. By fitting out many switches, one close to the
other, of the existent ones in the sensor, a slight
movement will cause picking up closings in two or
more switches, thus showing said movement; in this
manner, a high sensitivity is obtained. By fitting
out only switches that are sufficiently separated
one from the other, an ample movement will be
necessary to pick up the closing of two or more
different switches, obtaining in this manner a low
sensitivity.


8.

Movement sensor, as defined in claim 1 and further
characterized by a system of fitting out switches
(the schematical representation of which is shown
in figure 18) and which consists of: Two solid lines
J1 which limit the path followed by the mobile conductor
body J2; in this path are the tracks J3 and J4, one
close to the other, between which there is normally no electrical contact. When the mobile conductor
body passes over the zone where the tracks J3 and J4
are situated, it closes the circuit between them.
The element J5 is able to pick up the passage of
the mobile conductor body over the zone of tracks
J3-J4 if, upon closing of this circuit, and proceeding from track J4, a determined electrical voltage
(indicator voltage) reaches it. The switch J3-J4 is
thus fitted out if an indicator voltage is provided
in the element J4; in this case, the passage of the conductor body over the zone J3-J4 will be picked up
by the element J5 when the indicator voltage, proceeding from the element J4, reaches it. The switch
J3-J4 will not be considered fitted out if the indicator voltage is not provided  in track J4; in this
case, even though the conductor body passes over the
zone J3-J4, the element J5 will not pick up this
fact since the indicator voltage does not reach the
element J5.


9.


Movement sensor, as defined in claim 1 and further
characterized by two tracks K and L (figure 19) which
incide alternately in the path of the mobile body.
These tracks, conjunctively with the tracks close to
them (M1 and M2 in our example) form a sequence of
switches that can be fitted out. The switches formed
by the track K and nearby tracks to be fitted out
will be called "type K switches". The switches formed
by the track L and nearby tracks to be fitted out will be called "type L switches". Throughout the path,
type K and L switches are provided alternately and in
regular space. The indicator voltage reaches track K
when the mobile conductor body passes over a fitted
out type K switch. The indicator voltage reaches
track L when the mobile conductor body passes over
a fitted out type L switch. For low sensitivity, a
few alternate type K and type L switches are fitted
out, regularly distributed and widely spaced out one
with the other. An ample movement of the mobile conductor body will be required to enable it to travel
the space between the fitted out contiguous switches,
thus bringing the indicator voltage to tracks K and L.
The fact that the indicator voltage reaches tracks K
and L at successive times is a clear indication of
movement. If a higher sensitivity is desired, more
type K and L switches are then fitted out in order
to provide a new alternate and regularly spaced out
sequence of switches of both types. In this case,
a lesser displacement of the mobile conductor body
will be required so that the indicator voltage reaches
tracks K and L at successive times. Maximum sensitivity
will be obtained when all of the switches are fitted
out.

10.

Movement sensor, as defined in claim 1 and further
characterized by some guides made of conductor material
of the electricity (N2 in our example), some insulating
surfaces with conductor tracks (N3 in our example) and
a conductor body (N1 in our example). This conductor body moves easily by resting on a surface with tracks
and a guide. This surface and guide compel the conductor body to follow a curved path in its movement.
If the set is inoperative, the conductor body will
be positioned in the lowest possible place. In this
situation, said conductor body may be electrically
connecting the guide on which it rests with one of
the surface tracks, but never with two (the tracks
are sufficiently separated to ensure that this does
not happen). If the set moves, the conductor body,
during its travel, will put the guide in contact with
successive tracks at successive times. This fact is
easily recognizable by electrical means and constitutes
a clear indication that a movement has been produced.
As many tracks as desired, and possible, will be provided on the surface. If it is desired to pick up
very slight movements, many tracks, very close one
to the other, will be monitored by electrical means.
The fact that contact with the guide is produced
(through the conductor body) in two tracks, at least,
will be an indication of movement. If it is desired to
pick up only ample movements, tracks separated from
each other will be monitored by electrical means. The
fact that contact with the guide is produced (through
the conductor body) in two of these tracks, will indicate that movement has been produced, in this case an
ample movement.

11.

Movement sensor, as defined in claim 1 and further characterized by a manner of distributing and using the tracks cited on claim 10 which is described as follows:

Figure 26 shows how the conductor tracks are distributed throughout the path of the conductor body. A group of tracks (ten in our example) incide successively in the zone where the conductor body moves, forming a regularly spaced structure and which is repeated throughout said zone. The dotted lines N2 delimit the zone in which the conductor body will move. It is seen that the drawing of the tracks may be repeated as many times as desired in order to cover the whole path which the conductor body must follow. If it is desired to pick up only ample movements, tracks O and P, which are the most widely separated ones between each other, will be monitored electrically. The conductor body will have to travel the distance between O and P to put the guide in contact with both tracks (at different times, of course), thereby producing the corresponding indication of movement. If a higher sensitivity is desired, the new tracks O1 and P1, interlayed between the previous O and P, will be used. The previous existent space between O and P )O-P) is now distributed in three equal spaces between each other (O-P1-O1-P). The sequence of useful tracks which the conductor body found in its previous path was: O-P-O-P...., whereas now it is O-P1-O1-P-O1-P1-O-P1-O1-P-.... (see figure 26). To pick up movements now the type O (O and O1) tracks are monitored,

on the one hand, and, on the other, the type P (P and Pl) tracks. The conductor body will have to travel the distance between a type O (O and Ol) track and another type P (p and Pl) track to put in contact the guide with a track of each type and thus produce indication of the corresponding movement. In this case, the distance to be travelled is one-third of what was previously necessary, whereby the sensitivity has increased. For this reason, two new tracks between every two former ones, will be used, distributing the available space in three equal parts; each one of the new tracks is connected to the farthest one of the previous tracks and thereby obtain a new situation of greater sensitivity. In this new layout, tje travel necessary to produce indication of movement has been divided again by three. This procedure may be repeated successively, obtaining new levels of higher sensitivity.

12.

Movement sensor, as defined in claim 1 and further characterized as using a tridimensionally curved surface as support of the mobile conductor body (cylindrical, spherical, parabolic, etc. suface). In it, there are conductor tracks of the electricity normally insulated one with the other. On this surface with tracks is displaced with great ease a mobile conductor body. When the mobile conductor body rests on two adjacent tracks simultaneously, it closes the circuit between them. The mechanism constitutes a switch. The zone where the mechanism of the closing of an interruptor is produced is the line in which two conductor tracks are nearby; these zones will be called "switch lines". On the support surface may be established the desired switch lines. To avoid having to monitor a large number of switches, a group of similar switch lines are prepared in different zones of the support surface; these groups will be called "monitoring zones". The switches corresponding to lines with similar position in each group are all connected to the same monitoring electronic element (Q11, Q21, Q31, Q41 in figure 30). In this manner, with a reduced number of monitoring electronic elements (four in our example), the whole surface is controlled. Whatever the monitoring zone in which the conductor body moves, similar movements will produce similar effects in the monitoring electronic elements. These monitoring elements can tell the amplitude and speed of the movement within a zone by observing which type of switch lines the mobile body has crossed and the speed with which it has travelled from line to line.

13.

Movement sensor, as defined in claims 1 to 12 and further characterized by hexagonal monitoring zones forming a geometric structure similar to the honeycomb of a beehive. In each monitoring zone are concentric hexagonal and regularly distributed switch lines (O1 to O4 in figure 29). When the conductor body moves in any direction, starting from a home position, it always comes across switch lines, perpendicularly to its path, which will put the movement in evidence.

14.

Movement sensor, as defined in claim 1 and further characterized by a conductor body of the electricity, inter-insulated and forming a mosaic which completely covers the possible paths of the mobile conductor body. This mobile conductor body receives electrical voltage by means of a line or surface of conductor material of the electricity on which it rests when it moves. The movements of the mobile conductor body supposes openings and closings of the contacts of the line or surface with with successsive tracks. This permits installing this set in monitoring lines. With the aforesaid set placed on the object to be protected, the conductor body will be positioned in a place which supposes a stable equili - brum. In this situation, it will be transmitting the aforesaid voltage it receives to the track on which it rests, or two of them if it is on the separation line of these. To install this sensor in a monitoring circuit with normally closed switches and series connected, a terminal is connected to the wire, line or surface which feeds voltage to the mobile body. The other terminal is connected to the track on which the mobile body is. A normally closed switch is obtained between these terminals, which will form part of the monitoring line. If a monvement is produced, the mobile conductor body will move and position itself on other tracks. With this, the switch opens between the aforementioned terminals. If it is desired to detect only ample movements, several tracks, which surround the one supporting
the mobile body, will be connected to the same terminal
as the latter. In this manner, a more ample movement
is needed to bring the mobile body out of the zone
with tracks connected to said terminal, and with it,
open the circuit. The greater the number of tracks
connected to the terminal of the track which has the
conductor body, the greater will be the movement
necessary to produce the opening of the circuit, and
the lesser the sensitivity. On the other hand, it is
possible to install this same set in a monitoring
system with normally open switches. In this respect,
a terminal is connected to the line or surface which
feeds voltage to the mobile conductor body. The other
terminal is connected to all the tracks which surround
the mobile body at a determined distance. A normally
open switch is obtained from among these terminals. If
a movement is produced, the mobile conductor body moves
over the tracks and reaches the tracks connected to
the aforesaid terminal, thereby closing the circuit
between terminals. By using tracks at different distances
from the mobile body connected to the terminal,
different sensitivities may be obtained, that is,
pick up movements of a minimum amplitude to be selected.
To reduce the number of connections of this sensor
with the exterior, the tracks are classified in groups
of tracks close to each other. Each connection to
the exterior will be in contact with a track of each
group. All of these interconnected tracks, and connected
with the exterior, are in a similar position within the corresponding group. In this manner, as many exterior connections as the tracks in each group are thus obtained, and a connection for each track will not be necessary.

15.

Complement for movement sensors, which permit constructing the container which houses the mobile conductor body and the conductor tracks of the electricity on which, when the said mobile body moves, produces the indication of the alarm. This container consists of a concave body 80 which adheres to the printed circuit 85 which has the aforesaid conductor tracks, and outside the container, the electronic components necessary for the operation of the device. Said concave piece 80 has a curved and closed guide 82 on which the mobile conductor body rests when it moves on the tracks. On the other hand, said concave piece 80 also has cavities such as 84 in figure 40 or like 103 in figure 52, whose function is to keep the mobile conductor body far from the conductor tracks if it is desired. This container also has some conductor bars of the electricity 91 and 92 perpendicular to the printed circuit in the center of the container which end in an insulating piece 88. Between every two contiguous bars there is normally no electrical contact. When a brusque movement is produced on the sensor, the metallic sphere will jump and touch two contiguous bars, thereby closing the circuit between the alarm in motion. The circular piece 93 at the feet of the bars keeps the conductor sphere, in normal movements, from touching the bars 91 and 92. The function of the element 88 at the end of the bars is to keep the mobile conductor body from leaving the cavity 84 due to a brusque jump, but allows it however to leave, rolling over the walls of the cavity.

16.

Electronic analyzer for movement sensors of the type described in the previous claims, which is characterized as being able to interprete the signals from said sensor, indicating when any movement is produced starting from the monitoring starting position. This electronic circuit assigns to each one of the aforesaid switches a bistable. It suffices to have two types of switches (A and B in our example) and two bistables associated to them (E2 and E3 in our example). In a monitoring state, the closing of one of the aforesaid switches causes activation of the bistable which corresponds to ir. All the outlets of the bistables are connected to an electronic element capable of detecting the fact that there are two activated bistables. This fact implies that the mobile conductor body has moved on the tracks, producing closings in two different switches. When said electronic element (E4 in our example) picks up this situation, it will operate the warning mechanism herein provided (in our example a siren which actuates during a determined time). The bistables associated to the switches (E2 and E3) are connected to another element (E9) which deactivates them at the start of monitoring and after having
put in evidence a movement. The action of the
switches of the sensor on the associated bistables
(E1 and E2) may be controlled by means of sensitivity
bistables (S1 S2 and S3 in our example). If only bi-
stable S1 is activated, only switches sufficiently
separated one from the other will actuate on the
associated bistables (E2 and E3). If S1 and S2
are activated, there will be more switches which
actuate on the associated bistables, thus obtaining
a higher sensitivity. With the bistables S1 S2 and
S3 activated, an even higher sensitivity is obtained.
The manner of actuating the sensitivity (S1, S2 and
S3), in this case, is by controlling the passage
of the activator voltage to the associated bistables
to the switches (E2 and E3). This control may be carried
out before said voltage reaches the sensor (this way
it is done in the case described in section 3) or
after said activator voltage has passed the sensor
(this is the way it is done in the case described
in section 4).

17.

Electronic analyzer for movement sensors of the type
among those described in claims 1 to 15, which is
capable of interpreting the signals which are produced
in the sensor and picking up the situations of
violent movement to put them in evidence. This circuit
has a monostable which is activated when one of the aforesaid switches closes, and remains activated for
an adequate time. Subsequently, and if the sensor
is in movement, the other switch contiguous to the
previous one will close. If this occurs right away,
the monostable will still remain activated. An adequate electronic element, which may be a logical
gate, picks up this situation whereby the new switch
closes when the monostable is still activated (situation which corresponds to a violent movement). Once
this situation has been detected, this electronic
element sets the alarm mechanisms herein provided
in motion.


18.


Electronic analyzer for movement sensors of the type
among those described in claims 1 to 15, and characterized as being able to distinguish between movements
of different amplitude, whereby each switch connects
to a bistable. In a monitoring situation, the closing
of a switch produces the activation of the corresponding
bistable. The number of activated bistables indicates
the amplitude of the movement produced. A decoder indicates, when the movement is produced, how many
bistables are activated, that is, the exact amplitude
of the movement in question. By means of sensitivity
bistables (S1, S2 and S3), passage of the signals
indicating movement to the response mechanisms (a
siren in our example) is controlled. If the bistable
S1 is activated, the indications of the decoder
corresponding to very ample movements will activate
the warning mechanisms (many bistables associated
to activate switches). If S1 and S2 are activated, the previous signals from the decoder and also
others corresponding to less ample movements will
activate the warning mechanisms, having then a
higher sensitivity. With S1, S2 and S3 activated,
a far greater sensitivity will be obtained.


19.


Alarm system based on the sensor concept described in
claim 1 and subsequent ones, and characterized by
three essential elements:

A box which contains an alarm which puts in evidence,
by means of accoustic signals, the position changes
of said box. Another element is a control device of
the alarm circuits (for example a keyboard). The
third element is a flexible cable with the necessary
connections between the control device and the body
of the alarm. This set is autonomous and is used by
simply placing it inside or on the object to be
protected, leaving the control device in an accessible
place. Once the alarm is activated by means of this
control device, any change in the position of the
object, and therefore of the alarm, will cause the
siren to sound. The fact of having the control device
at the end of the flexible cable permits activating
and deactivating the alarm without moving the box,
that is, without provoking false alarms. This fact
also permits leaving the alarm inside a satchel
and keeping the control device outside in order
to activate or deactivate it. Lastly, the box of this alarm system has a threaded orifice (53 in fig. 45) which permits establishing highly varied securings of this alarm to the objects to be protected.


20.


Electronic circuit adequate for the portable alarm system as defined in claim 19, which is characterized as having the following elements:


A keyboard and adequate electronic circuits which permit control of the alarm by means of pulsations on said keyboard. Another element is a control circuit based on a bistable and a delay element the states of which correspond to a monitoring and inoperative situation. The delay element ensures that the passage to a monitoring situation is delayed in determined elements. Another element is the movement sensor with its corresponding electronic analyzer. Sensitivity bistables are also provided the different states of which permit obtaining different sensitivities of the movement sensor. Other conventional elements are also provided for picking up incidences. The alarm indicator element is a siren with its corresponding timer. This siren is activated immediately by some sensors or after a prealarm in the case of others. The accoustic device is used for three functions: One as prealarm buzzer, another as siren and the third to produce a sound impulse upon actuating a pulsator of the keyboard. Lastly, a self-feeding supplementary siren may be connected to this electronic circuit by means of a two-wire connection.


21.


Electronic circuit for analyzing the combinations
pressed on the keyboard, according to claim 20, which
is characterized by various bistables (in our example
two). Activation and deactivation of the bistables is
carried out from the keyboard but with determined
conditions. The bistables can be activated only up
to the last one in a determined order. Once the last
one is activated, all the previous ones are deactivated.
In this situation (only the last one is activated)
there is a possibility of control on the internal
circuits (activate the alarm, deactivate it, select
sensitivity, etc.). Each order to be transmitted to
the interior will have an assigned impulse starter.
The signals proceeding from this pulsator will reach
their destination only if the bistables are in a
situation to permit the control (only the last one
activated). This control situation is maintained
during a certain time, after which (controlled by
a timer element) the last bistable is deactivated
and the possibility of control on the interior
finishes. One or various pulsators are also provided, which directly deactivate the last bistable,
thereby cancelling what has been done in previous
pulsations in the sense of obtaining control
access.

22.

Electronic circuit for the alarm according to claim 20, which is characterized by a bistable and a delay element. One state of the bistable corresponds to a monitoring situation and the other to an inoperative situation. The sensors receive indication of the state of this bistable and, in consequence, warn of possible incidences (monitoring state) or do not warn (inoperative state). The transmission lines which lead to the siren to produce its activation are also controlled by this bistable. In an inoperative state, the signals which tend to activate the siren are blocked before reaching the latter  Determined elements of activation of the alarm are not controlled by this bistable, this deals whith emergency, anti-robbery, etc. devices, which have to actuate in any state of the alarm. The delay element which accompanies the control bistable and has been cited hereinabove serves a purpose so that the indication of a monitoring situation arrives some time after the corresponding order has been produced, to determined sensor and control elements for passage of signals. The purpose of this delay is so that the user, after putting the alarm in monitoring state, may go across the field protected by these sensors, without producing  an alarm.

23.

Electronic circuit for alarm systems as defind in claim 20, and which is characterized by a siren timer.

This siren timer consists of the elements which have the letter U in figure 43. Its basic advantage is that, in a normal situation, the elctrolyte condenser U5 is charged, whereby it does not lose its characteristics. The alarm time starts with activation of the bistable U. When this is produced, the condenser U5 starts discharging through the resistance U2. The duration of this discharge is what provides the siren timing. With this discharge completes and through the delay element U7, U8, deactivation of the bistable U1 is produced. With it, the condenser U5 recharges, rapidly this time, through the diode U3 and the resistance U4 (of a much lesser value than U2). In this manner, the set readies rapidly for a new maneuver. The delay set U7-U8 serves so that, having a permanent alarm signal at the inlet of U1, there is time for the condenser U5 to recharge before starting a new cycle.

24.

Electronic circuit for alarm system as defined in claim 20, which is characterized as using the loudspeaker for three uses:
One is the normal use of the siren. Another is the prealarm buzzer. The third is to provide a sound impulse when an effective pulsation is produced on the touch keyboard. The prealarm sound and the indications of pulsation have a small and adjustable sound intensity by means of values selected for 46 and 36. The siren sound is, however, of great intensity. Both the pulsation and prealarm indicator impulses operate
the signal generator 45. The siren signals reach 35.
The set 36, 47 and 46 reduce the voltage of the signals
proceeding from 45 before applying them to the base
of the transistor 48. This supposes a lesser sound
intensity in the loudspeaker. This set, thanks to
the diode, does not reduce the voltage of the signals
proceeding from 35 (siren) in applying them to the
base of the transistor 48, thereby producing a highly
intense accoustic signal.


25.


Alarm system as defined in claims 19 an 20 and further
characterized by a touch keyboard consisting of metallic
tracks on a non-conductor support. A track (74 in fig.
48) common to all the switches, which surrounds the
whole keyboard, is provided, and independent tracks
(like 72 in fig. 48) which go downwardly from the
connections (75 in fig. 48) through the center of the
keyboard. Each pulsator is formed by an independent
track and  the common track. Actuating the pulsator
consists in touching both tracks simultaneously with
the finger, thereby producing a reduction of the
resistance between them. In the keyboard is also
provided a spring (70 in figure 49) which keeps a
circuit (76 in figure 48) normally closed. In case
of emergency situation the spring 70 is removed from
its place, the circuit 76 is opened and the siren
immediately starts operating.

26.

Alarm system as defined in claim 20, which may have
connected, by means of two conductor wires, a supplementary siren, this coupling thus being characterized
as being consituted by two electric cables. One of
them puts in common the masses of the main alarm
and the controller of the secondary siren. The other
cable is maintained by the main alarm normally at
logical level one. Only in case of intrusion in a
monitoring state does the main alarm adjust this
last connecting cable to zero level. The electric
current which, proceeding from the main alarm,
passes through the resistances $Z2$ and $Z3$ of protection
and the cable $Z9$ is mass carried through another resistance of a value far superior to the sum of the
protective resistances. In this manner, in the upper
part of said resistance $Z4$ remains the logical level
one which comes out of the main alarm. To this upper
part of the resistance $Z4$ is connected a device which
activates a siren if said upper part of the resistance
$Z4$ drops to zero logical level. In case of intrusion the
main alarm adjusts the connection $Z9$ (control cable)
to zero and in the upper point of the resistance $Z4$
we will also have a zero logical level; in consequence,
and while this lasts, the auxiliary siren will be
sounding. If someone cuts the control cable $Z9$, the
upper end of the resistance $Z4$ adjusts to a zero
logical level through the latter and the auxiliary
siren is activated. If the connecting cables $Z9$ and $Z10$
shortcircuit, the upper end of the resistance $Z4$ also
adjusts to zero and, with it, the siren is activated.

27.


Alarm system as defined in claim 19 and further characterized by a securing system which basically consists
of a threaded orifice (53 in fig. 45, 46 and 47) which
permits establishing, among others, the following
types of securing:

Securing of the alarm to a suitcase (fig. 46). 53 is the
threaded orifice in which is inserted the threaded rod
55. This rod has a needle (56) which is driven into the
leather of the suitcase 58. The needle 56 has an eye
in which a pin (57) is inserted to keep said needle
from being extracted. In short, to release the alarm,
the suitcase has to be opened. Securing of the alarm
to a door without drilling in a visible place (fig, 47).
The square 61 has a threaded rod 63 in which the alarm
is placed. On the other hand, said square is screwed
to the door at the upper part (screw 59) at a place
which is not visible. The element 62 is a magnetic
sensor connected to the alarm. The element 60, in
the doorframe, is the magnet necessary for operation
of the sensor.


28.


Alarm system, based on the sensor concept described
in claim 1 and further characterized by a sensor device
which translates the position changes starting from
any home position in an electrical impulse of determined
duration. This sensor device has a control which permits selecting the minimum amplitude of the position change
the detection of which is desired. The electric signal
proceeding from this sensor actuates on a power phase
which causes the situation of a relay to change during
the time the impulse lasts. The relay contacts which
were previously open, during the impulse will be closed.
The contacts which were previously closed during the
impulse, will be open. This permits incorporating the
relay, and with the sensor, in a normally open or
normally closed monitoring line, such as are used in
alarm systems. The feeding of this device may be incorporated in it or receive it through the installation
lines or incorporating a rechargeable battery maintained
through the installation lines.

29.

Alarm system, based on the sensor concept described in
claim 1, characterized by placing in objects, drawers,
etc. movement sensors which do not require levelling
and which have selectable sensitivity by means of a
control. Whatever the starting position of this sensor,
it picks up a change of said position. With the sensor
is also provided a radio transmitter. When a position
change is produced, the sensor indicates it to the
transmitter, and the latter sends a signal to the monitoring central. The transmitter has a control which
permits, among several, signals to be transmitted.
Each signal supposes a different order to the monitoring
central. If this central is activated, it picks up
the signal proceeding from the sensor that it had moved, interprets it and, by means of an adequate
control link, causes the mechanism to actuate
corresponding to the type of signal received. The central
may be kept in a partial monitoring state. In this
situation, only the desired mechanisms operate when
the corresponding signal arrives. The control link
in the rest of the mechanisms is blocked so that,
even though signals of the corresponding type are
produced, these will not be able to operate the
specified mechanism.

FIG.1

FIG.2

FIG.3

FIG.4

FIG.5

FIG.6

FIG.7

FIG 8

FIG.9

FIG.10

FIG.11

FIG.12

FIG.13

FIG.14

FIG.15

FIG.16

FIG.17

FIG.18

FIG.19

FIG.20

FIG.21

N4

N2

N3

N1

FIG.22

N2

N5

N3

N1

FIG.25

FIG.23

N2

N3

N4

N1

N6

FIG.24

N3  N5

N2

N1

FIG.26

FIG.27

FIG.28

Q1

Q11

Q2

Q21

Q3

Q31

Q4

Q41

FIG.30

Q4
Q3
Q2
Q1

FIG.29

0098913

FIG.31

FIG.32

R14　R15　R6

R16

R9

R13

R12　R1

FIG. 33

1　2　3　4　5　1　2　3　4　5

R15

R9

FIG. 34

R9　3

R15

FIG. 35

FIG.36

R9

R15

2

3

4

FIG. 37

R9

R15

1 2 3 4 5

FIG.38

R16

R16

17/24

FIG. 39

FIG. 40

FIG.41

FIG. 42

FIG.43

FIG. 44

FIG. 45

53

55

56

58

57

FIG.46

59

60

61

62

63

53

FIG. 47

FIG. 48

FIG. 49

## FIG. 50

## FIG. 51

## FIG. 52

FIG. 53

111

110

109

FIG. 54

123

121

122

FIG. 55